# EUROPÄISCHE PATENTSCHRIFT

(11) **EP 2 345 354 B1**
(45) Veröffentlichungstag und Bekanntmachung des Hinweises auf die Patenterteilung: **11.07.2012**
(21) Anmeldenummer: 10405010.9
(22) Anmeldetag: 19.01.2010
(51) Int. Cl.: A47J 31/44, A47J 31/46

(54) **Abgabevorrichtung zur Abgabe von Kaffee und/oder Milch und/oder Milchschaum, Getränkebereitungsmaschine mit einer Abgabevorrichtung und Verfahren zum Zusammensetzen einer Abgabevorrichtung**
Dispensing device for dispensing coffee and/or milk and/or milk foam, beverage making machine with a dispensing device and method for assembling a dispensing device
Dispositif de distribution destiné à distribuer du café et/ou du lait et/ou de la mousse de lait, machine de préparation de boissons dotée d'un dispositif de distribution et procédé d'assemblage d'un dispositif de distribution

(43) Veröffentlichungstag der Anmeldung: 20.07.2011
(73) Patentinhaber: Jura Elektroapparate AG, 4626 Niederbuchsiten (CH)
(72) Erfinder: Ullmann, Erich, 4622 Egerkingen (CH); Büttiker, Philipp, 4625 Oberbuchsiten (CH)
(74) Vertreter: EGLI-EUROPEAN PATENT ATTORNEYS

(56) Entgegenhaltungen:
- CH-A5- 685 597

## Beschreibung

Die Erfindung bezieht sich auf eine Abgabevorrichtung zur Abgabe von Kaffee und/oder Milch und/oder Milchschaum, eine Getränkebereitungsmaschine mit einer derartigen Abgabevorrichtung und ein Verfahren zum Zusammensetzen einer derartigen Abgabevorrichtung.

Es sind Getränkebereitungsmaschinen bekannt, bei welchen verschieden Fluide wie Kaffee, Milch- und/oder Milchschaum, Heisswasser oder Dampf mittels verschiedener Abgabevorrichtungen abgegeben werden, welche - voneinander räumlich getrennt - an verschiedenen Positionen an der jeweiligen Getränkebereitungsmaschine angebracht sind. In diesem Fall muss ein Trinkgefäss dementsprechend an verschiedenen Positionen jeweils unterhalb der jeweiligen Abgabevorrichtung platziert werden, welche zur Abgabe des jeweils gewünschten Fluids bestimmt ist. Zur Zubereitung eines Cappuccino-Getränks muss beispielsweise das Trinkgefäss zuerst unterhalb einer Vorrichtung zur Abgabe von Milchschaum platziert werden und der Bezug des Milchschaums abgewartet werden. Anschliessend muss das Trinkgefäss unterhalb eines Kaffee-Auslaufrohrs zur Kaffeeausgabe platziert werden. Zum Aufbrühen eines Teegetränkes muss das Trinkgefäss unterhalb eines Heisswasser- und/oder Dampf-Auslaufrohrs, getrennt vom Kaffee-Auslaufrohr, platziert werden. Dieses Umplatzieren des Trinkgefässes ist für einen Benutzer unbequem und zeitaufwendig. Ausserdem benötigen derartige Getränkebereitungsmaschinen verhältnismässig viel Platz.

Die DE 10 206 043 903 B3 offenbart eine Brühgetränkemaschine zur Zubereitung von Tassenportionen mit einem Auslass für das Brühgetränk und mit einem weiteren Auslass für Heissdampf und/oder Milchschaum. Hierbei ist einer der Auslässe bewegbar, sodass die Enden der Auslässe vertikal in dieselbe Tasse gerichtet sind, wobei der Auslass für das Brühgetränk in Relation zum Auslass für Heissdampf und/oder Milchschaum horizontal bewegbar ist. Es besteht ein Nachteil darin, dass zwei verschiedene Auslässe unabhängig voneinander am Gehäuse der Brühgetränkemaschine befestigt werden müssen und demzufolge zur Bewegung der jeweiligen Auslässe eine aufwändige Mechanik benötigt wird. Ausserdem hat eine derartige Brühgetränkemaschine ebenfalls einen verhältnismässig grossen Platzbedarf, zumal die verschiedenen Auslässe nebeneinander angeordnet sind.

Die CH 685597 A5 offenbart einen Auslasskopf für ein Kaffeemaschinengerät, welcher Auslassöffnungen für jeweils Milchschaum, ein Kaffeegetränk und Heisswasser enthält. Der Milchschaum wird hierbei innerhalb einer Kammer hergestellt, welche in den Auslasskopf integriert ist. Die Milch, welche zur Bereitung des Milchschaums benötigt wird, muss ausserhalb des Auslasskopfes erwärmt werden und zum Auslasskopf durch Leitungen gepumpt werden, welche im Innern des Kaffeemaschinengeräts angeordnet sind. Aus hygienischen Gründen müssen insbesondere die Teile, welche mit Milch in Berührung kommen, relativ häufig gereinigt werden, wobei zu Reinigungszwecken eine Reihe von Einzelteilen des Auslasskopfes bzw. des Kaffeemaschinengeräts demontiert werden müssen. Im vorliegenden Fall besteht ein Nachteil darin, dass relativ viele verschiedene Teile des Auslasskopfes und im Innern des Kaffeemaschinengeräts angeordnete Teile mit Milch in Berührung kommen und zu Reinigungszwecken separat voneinander demontiert werden müssen. Aus diesem Grunde ist die Demontage dieser Teile vor einer Reinigung, die Reinigung dieser Teile an sich und die Montage dieser Teile nach erfolgter Reinigung kompliziert und zeitaufwendig und erfordert von einem Benutzer des Kaffeemaschinengeräts umfangreiche Detailkenntnisse hinsichtlich der Konstruktion des Auslasskopfes und des Kaffeemaschinengeräts.

Der Erfindung liegt die Aufgabe zugrunde, die genannten Nachteile zu vermeiden und eine Abgabevorrichtung zur Abgabe von Kaffee und/oder Milch und/oder Milchschaum und gegebenenfalls weitere Fluide zu schaffen, welche kompakt aufgebaut ist und schnell und einfach in einzelne Teile zerlegbar ist, um Teile der Abgabevorrichtung, welche im Betrieb mit Milch in Berührung kommen, leicht reinigen zu können. Weiterhin soll ein entsprechendes Verfahren zum Zusammensetzen dieser Abgabevorrichtung vorgeschlagen werden.

Diese Aufgabe wird gelöst durch eine Abgabevorrichtung mit den Merkmalen des Patentanspruchs 1.

Diese Abgabevorrichtung umfasst eine Gruppe von Fluidleitungen zur Zufuhr von mehreren Fluiden (im Folgenden "Fluidleitungsgruppe" genannt), welche Fluidleitungsgruppe mindestens eine erste Fluidleitung zur Zufuhr von Kaffee und eine zweite Fluidleitung zur Zufuhr von Dampf umfasst, wobei die erste Fluidleitung in ein Kaffee-Auslaufrohr mündet und die zweite Fluidleitung eine Austrittsöffnung für den Dampf aufweist. Weiterhin umfasst die Abgabevorrichtung eine Mischeinrichtung zum Mischen von Milch mit Dampf und/oder Luft, welche Mischeinrichtung eine Kammer, eine Milchleitung zur Zufuhr von Milch in die Kammer, eine Luftleitung zur Zufuhr von Luft in die Kammer, eine Eintrittsöffnung zur Zufuhr von Dampf in die Kammer und ein Auslaufrohr zur Abgabe von Milch und/oder Milchschaum aus der Kammer umfasst. Weiterhin umfasst die Abgabeeinrichtung ein Gehäuse, welches die Fluidleitungsgruppe, das Kaffee-Auslaufrohr und die Mischeinrichtung mindestens teilweise umgibt, wobei die Mischeinrichtung in eine erste vorgegebene Stellung relativ zur zweiten Fluidleitung bringbar ist, in welcher Stellung eine Fluidverbindung zwischen der Austrittsöffnung der zweiten Fluidleitung und der Eintrittsöffnung der Mischeinrichtung zur Zufuhr von Dampf in die Kammer hergestellt ist.

Gemäss der Erfindung umfasst das Gehäuse der Abgabevorrichtung zumindest ein erstes Gehäuseteil und ein zweites Gehäuseteil, wobei die Fluidleitungsgruppe am ersten Gehäuseteil angeordnet oder im ersten Gehäuseteil ausgebildet ist und im zweiten Gehäuseteil eine Ausnehmung zur Aufnahme der Mischeinrichtung ausgebildet ist, in welche Ausnehmung die Mischeinrichtung derart aufnehmbar ist, dass die Mischeinrichtung in einer zweiten vorgegebenen Stellung relativ zum zweiten Gehäuseteil gehalten ist. Weiterhin sind das erste Gehäuseteil und das zweite Gehäuseteil derart zusammensteckbar, dass, falls die Mischeinrichtung in die Ausnehmung im zweiten Gehäuseteil aufgenommen ist, die Mischeinrichtung die erste vorgegebene Stellung relativ zur zweiten Fluidleitung einnimmmt. Letzteres bewirkt, dass beim Zusammenstecken des ersten Gehäuseteils und des zweiten Gehäuseteils eine Fluidverbindung zwischen der Austrittsöffnung der zweiten Fluidleitung und der Eintrittsöffnung der Mischeinrichtung zur Zufuhr von Dampf in die Kammer hergestellt ist.

Diese Abgabevorrichtung ist aus wenigen, einfach zusammensteckbaren Elementen zusammengesetzt und kann deshalb insbesondere zur Reinigung schnell und einfach zerlegt werden. Hierbei ist das erste Gehäuseteil in der Regel dauerhaft mit einer Getränkebereitungsmaschine verbunden. In dem ersten Gehäuseteil befinden sich vorteilhaft keine Elemente, welche mit Milch in Kontakt treten, sodass eine Reinigung des ersten Gehäuseteils und der in diesem Gehäuseteil angeordneten Fluidleitungen unkritisch ist. Die Reinigung sämtlicher Einheiten und Leitungen der Getränkebereitungsmaschine, welche mit Milch in Verbindung kommen, sollte unter hygienischen Gesichtspunkten und zur Vermeidung einer Gesundheitsgefährdung sehr gründlich und insbesondere in kurzen Zeitintervallen erfolgen. Das Gleiche gilt für externe Einheiten und Leitungen, welche mit Milch in Kontakt treten und für eine Versorgung der Mischeinrichtung mit Milch verwendet werden können, beispielsweise für einen Milch-Vorratsbehälter und einen Milchschlauch, welcher den Milch-Vorratsbehälter mit der Mischeinrichtung verbindet.

Bei der erfindungsgemässen Abgabevorrichtung ist die Mischeinrichtung die einzige Komponente, welche im Betrieb mit Milch in Kontakt gebracht wird. Vorteilhafterweise kann die Mischeinrichtung als Ganzes in das Gehäuse der Abgabevorrichtung eingebaut und als Ganzes aus dem Gehäuse der Abgabevorrichtung entfernt werden.

Die Erfindung vereinfacht insbesondere den Einbau der Mischeinrichtung in das Gehäuse, insbesondere bei engen Platzverhältnissen im Gehäuse. Der Einbau der Mischeinrichtung in das Gehäuse wird dadurch vereinfacht, dass das Gehäuse aus zwei zusammensteckbaren Teilen, dem ersten Gehäuseteil und dem zweiten Gehäuseteil, zusammengesetzt ist und die Mischeinrichtung vor dem Zusammenstecken des ersten Gehäuseteils und des zweiten Gehäuseteils lediglich in der im zweiten Gehäuseteil ausgebildeten Ausnehmung platziert werden muss. Für einen Benutzer ist das Platzieren der Mischeinrichtung am zweiten Gehäuseteil ein einfach kontrollierbarer Vorgang, welcher keine besonderen manuellen Fertigkeiten erfordert. Weiterhin ist das Zusammenstecken des ersten Gehäuseteils und des zweiten Gehäuseteils schnell und einfach durchführbar, zumal ein Benutzer das Zusammenstecken der Gehäuseteile von aussen leicht kontrollieren kann und in der Regel auf den ersten Blick erkennen kann, ob die Gehäuseteile korrekt zusammengesteckt sind, sodass die Mischeinrichtung betriebsbereit ist. Das erste Gehäuseteil und das zweite Gehäuseteil können beispielsweise so geformt sein, dass sie
- für einen Benutzer auf den ersten Blick erkennbar - nur zusammensteckbar sind, wenn das zweite Gehäuseteil (innerhalb vorbestimmter Toleranzen) in eine einzige vorbestimmte räumliche Lage relativ zum ersten Gehäuseteil gebracht ist. Die Anordnung der Mischeinrichtung relativ zum zweiten Gehäuseteil ermöglicht es, dass die Mischeinrichtung automatisch korrekt an die zweite Fluidleitung zur Zufuhr von Dampf am ersten Gehäuseteil angeschlossen wird, wenn das erste Gehäuseteil und das zweite Gehäuseteil zusammengesteckt werden. Eine Installation der Mischeinrichtung in der Abgabevorrichtung ist deshalb schnell, fehlerfrei und ohne Studium einer Gebrauchsanweisung durchführbar. Für einen Benutzer erübrigt es sich insbesondere, die Mischeinrichtung mit den Händen zu erfassen und derart präzise zu führen, dass die gewünschte Fluidverbindung zwischen der Austrittsöffnung der zweiten Fluidleitung und der Eintrittsöffnung der Mischeinrichtung zur Zufuhr von Dampf hergestellt wird. Da der Benutzer lediglich die Gehäuseteile erfassen muss und ein korrektes Zusammenstecken der Gehäuseteile leicht überwachen kann, ist der Benutzer insbesondere davor geschützt, dass er mit den Händen mit Fluidleitungen in Kontakt kommen kann, die im Betrieb erhitzt sein können. Dies ist insbesondere vorteilhaft, wenn die Mischeinrichtung dicht neben den Fluidleitungen bzw. dicht neben dem Kaffee-Auslaufrohr platziert werden muss.

Die Anzahl der Schritte zur Demontage der erfindungsgemässen Abgabevorrichtung ist sehr gering. Dies hat den vorteilhaften Effekt, dass der Benutzer dazu in der Lage ist, die Abgabevorrichtung schnell zu zerlegen und die Mischeinrichtung, welche das einzige Bauteil ist, welches mit Milch in Kontakt tritt, schnell und einfach zu reinigen. Zu diesem Zweck muss ein Benutzer lediglich das zweite Gehäuseteil vom ersten Gehäuseteil separieren. Die Mischeinrichtung ist dann zugänglich und kann vom Benutzer manuell erfasst und vom ersten Gehäuseteil bzw. vom zweiten Gehäuseteil separiert und anschliessend gereinigt werden. Beispielsweise kann die Mischeinrichtung unter fliessendem Wasser gereinigt werden oder für kurze Zeit in ein Reinigungsbad gelegt werden.

Vorzugsweise ist die Abgabevorrichtung höhenverstellbar an einer Getränkebereitungsmaschine angeordnet, um Trinkgefässe unterschiedlicher Grössen problemlos befüllen zu können. Ein weiterer Vorteil der Höhenverstellbarkeit besteht darin, dass das zweite Gehäuseteil besonders einfach von dem ersten Gehäuseteil getrennt werden kann, wenn dieses zuvor möglichst weit nach oben verschoben wird. Letzteres ist insbesondere vorteilhaft, wenn die Abgabevorrichtung derart an einer Getränkebereitungsmaschine angeordnet ist, dass das erste Gehäuseteil ein oberer Teil des Gehäuses der Abgabevorrichtung ist und das zweite Gehäuseteil ein unterer Teil des Gehäuses ist und das zweite Gehäuseteil nach unten bewegt werden muss, um das zweite Gehäuseteil vom ersten Gehäuseteil zu separieren.

Bei einer weiteren Ausführungsform der Abgabevorrichtung enthält die Fluidleitungsgruppe ferner eine dritte Fluidleitung zur Zufuhr von Heisswasser, welche in ein aus dem ersten Gehäuseteil herausgeführtes Heisswasser-Auslaufrohr mündet. Somit sind das Heisswasser-Auslaufrohr und die damit verbundene dritte Fluidleitung lediglich in dem ersten Gehäuseteil enthalten und müssen bei der Demontage des zweiten Gehäuseteils nicht entfernt werden. Hierdurch ist vorteilhafterweise die Anzahl der zu demontierenden Bauteile gering, sodass die Demontage einfach durchführbar ist. Weiterhin hat diese Ausführungsform den Vorteil, dass sie kompakt aufgebaut ist und ausser einer Abgabe von Kaffee und/oder Milch und/oder Milchschaum auch eine Abgabe von Heisswasser in ein Trinkgefäss ermöglicht, welches an einer vorgegebenen Position unterhalb der Abgabevorrichtung positioniert ist.

Bei einer weiteren Ausführungsform der Abgabevorrichtung umfasst das erste Gehäuseteil zumindest ein Führungselement und das zweite Gehäuseteil ein Gegenführungselement, wobei beim Zusammenstecken des ersten Gehäuseteils und des zweiten Gehäuseteils das jeweilige Führungselement mit dem Gegenführungselement derart in Eingriff bringbar ist, dass das erste Gehäuseteil und das zweite Gehäuseteil jeweils aneinander längs eines vorgegebenen Weges geführt sind. Vorzugsweise bilden das Führungselement und das Gegenführungselement eine Linearführung, sodass das erste Gehäuseteil und das zweite Gehäuseteil jeweils längs eines geradlinigen Weges geführt sind. Das Führungselement und das entsprechende Gegenführungselement stehen in einem derartigen Zusammenhang, dass das zweite Gehäuseteil an das erste Gehäuseteil ansetzbar und auf das erste Gehäuseteil aufsteckbar ist, sofern das jeweilige Führungselement mit dem Gegenführungselement in Eingriff gebracht ist. Diese Anordnung des Führungselements und des Gegenführungselements stellt zudem sicher, dass die beiden Gehäuseteile nur dann zusammengesteckt werden können, sofern das jeweilige Führungselement mit dem Gegenführungselement in Eingriff gebracht ist. Ein versehentlich fehlerhaftes Zusammenstecken des ersten Gehäuseteils und des zweiten Gehäuseteils kann somit vermieden werden, zumal ein Benutzer leicht kontrollieren kann, ob das jeweilige Führungselement mit dem Gegenführungselement in Eingriff gebracht ist oder nicht und ob das erste Gehäuseteil und das zweite Gehäuseteil aneinander längs eines vorgegebenen Weges geführt sind oder nicht. Hierdurch wird eine mögliche Fehlerquelle bei dem Zusammenbau eliminiert, z.B. eine Verdrehung des zweiten Gehäuseteils relativ zum ersten Gehäuseteil. Dadurch, dass das erste Gehäuseteil und das zweite Gehäuseteil mittels des Führungselements und des Gegenführungselements jeweils aneinander längs eines vorgegebenen Weges geführt sind, wird zudem gewährleistet, dass die Mischeinrichtung beim Zusammenstecken des ersten Gehäuseteils und des zweiten Gehäuseteils präzise geführt wird, sodass gewährleistet werden kann, dass die Mischeinrichtung kontrolliert derart in Richtung auf die Austrittsöffnung der zweiten Fluidleitung bewegt wird, dass eine Fluidverbindung zwischen dieser Austrittsöffnung und der Eintrittsöffnung der Mischeinrichtung zur Zufuhr von Dampf hergestellt wird.

Das Führungselement kann beispielsweise als eine mit dem ersten oder zweiten Gehäuseteil verbundene oder daran angeformte Schiene ausgebildet sein, welche in Längsrichtung zu dem jeweiligen Gehäuseteil verläuft. In diesem Beispiel kann das entsprechende Gegenführungselement als ein in dem anderen Gehäuseteil ausgebildeter Schlitz realisiert sein, welcher sich ebenfalls in Längsrichtung in einem Bereich dieses Gehäuseteils erstreckt. Hierbei entspricht das Querschnittsprofil der Schiene dem Querschnittsprofil des Schlitzes.

Bei einer Weiterentwicklung der vorstehend genannten Ausführungsform sind das Führungselement und das Gegenführungselement derart ausgebildet, dass das Führungselement nur dann mit dem Gegenführungselement in Eingriff bringbar ist, wenn das zweite Gehäuseteil sich (innerhalb vorgegebener Toleranzen) in einer vorbestimmten Position relativ zum ersten Gehäuseteil befindet. Auf diese Weise wird erzwungen, dass das erste Gehäuseteil und das zweite Gehäuseteil nur dann zusammensteckbar sind, wenn diese Gehäuseteile auf eine einzige vorbestimmte Weise relativ zueinander positioniert sind. Andernfalls wird ein Zusammenstecken der beiden Gehäuseteile verhindert. Dem obigen Beispiel folgend, können beispielsweise die Schiene und der Schlitz derart ausgebildet und entsprechend positioniert sein, dass eine jegliche unkorrekte Zusammenführung zwischen dem ersten und zweiten Gehäuseteil verhindert wird. Beispielsweise kann ein unerwünschtes (fälschliches) Aufsetzen des zweiten Gehäuseteils auf das erste Gehäuseteil unterbunden werden, indem eine an einem der Gehäuseteile angeordnete Schiene gegen ein an dem jeweils anderen Gehäuseteil angeordnetes Hindernis stösst, sodass ein Zusammenstecken der beiden Gehäuseteile verhindert wird. Somit wird der Benutzer im Vorfeld darauf hingewiesen, dass der Zusammenbau bei dieser fälschlichen Positionierung nicht zum Ziel führt. Folglich wird der Benutzer dazu hingeführt, die korrekte Positionierung zum Zusammenbau zu wählen. Dadurch wird eine Funktionsstörung und/oder eine Beschädigung der Getränkebereitungsmaschine vermieden. Zudem wird vermieden, dass heisse Flüssigkeiten, wie beispielsweise frisch gebrühter Kaffee, unkontrollierbar austreten können und dem Benutzer eventuell Verbrühungen zuführen.

Eine weitere Ausführungsform der Abgabevorrichtung ist derart ausgebildet, dass das zweite Gehäuseteil eine Führungseinrichtung enthält, welche derart ausgelegt ist, dass das Kaffee-Auslaufrohr beim Zusammenstecken des ersten Gehäuseteils und des zweiten Gehäuseteils zumindest abschnittsweise mit der Führungseinrichtung in Eingriff bringbar ist. Vorzugsweise ist das Kaffee-Auslaufrohr ein sich in seiner Längsrichtung geradlinig erstreckender Körper und die Führungseinrichtung als Linearführung für diesen Körper ausgelegt. Eine solche Anordnung des Kaffee-Auslaufrohrs, welches mit dem ersten Gehäuseteil verbunden ist und damit eine Einheit bildet, und der Führungseinrichtung, welche in dem zweiten Gehäuseteil enthalten ist, gewährleistet ein stets exaktes Aufsetzen des zweiten Gehäuseteils auf das erste Gehäuseteil. Ein Zusammenstecken des ersten und des zweiten Gehäuseteils ist in diesem Fall nur möglich, wenn das Kaffeeauslaufrohr (innerhalb vorgegebener Toleranzen) mit der Führungseinrichtung in Eingriff gebracht wird und in einer von der Führungseinrichtung vorgegebenen Richtung bewegt wird.

Bei einer weiteren Ausführungsform der Abgabevorrichtung enthält das erste oder zweite Gehäuseteil zumindest eine Schnappverbindungseinrichtung mit einer Sperrklinke, welche mit einer Ineingriffnahmesektion, welche an dem jeweils anderen Gehäuseteil angebracht ist, in Eingriff bringbar ist. Somit kann das zweite Gehäuseteil schnell und leicht lösbar mit dem ersten Gehäuseteil verbunden werden. Zudem kann der Benutzer beim Anblick der jeweiligen Anordnung zwischen Schnappverbindungseinrichtung bzw. Sperrklinke und Ineingriffnahmesektion leicht erkennen, bei welcher Positionierung das zweite Gehäuseteil auf das erste Gehäuseteil aufzustecken ist.

Bei einer weiteren Ausführungsform der Abgabevorrichtung enthält die Mischeinrichtung einen Führungsabschnitt und umfasst das zweite Gehäuseteil eine Aussparung, wobei die Aussparung derart geformt ist, dass der Führungsabschnitt mit der Aussparung in einen festen Eingriff bringbar ist. Somit lässt sich die Mischeinrichtung nur bei korrekter Positionierung in das zweite Gehäuseteil einsetzen. Hierzu bedarf der Benutzer keinerlei Information, da er bei Sichtung des an der Mischeinrichtung ausgebildeten Führungsabschnittes und der an dem zweiten Gehäuseteil ausgebildeten Aussparung sofort erkennt, welche räumliche Lage die Mischeinrichtung relativ zum zweiten Gehäuseteil annehmen muss, damit der Führungsabschnitt mit der Aussparung in einen festen Eingriff gebracht werden kann.

Ein weiterer Vorteil besteht darin, dass durch das Zusammenwirken zwischen dem Führungsabschnitt und der Aussparung ein fester Halt zwischen der Mischeinrichtung und dem zweiten Gehäuseteil bereitgestellt werden kann. In einer bevorzugten Variante ist der Führungsabschnitt derart mit der Aussparung in Eingriff gebracht, dass die Mischeinrichtung in der zweiten vorgegebenen Stellung relativ zum zweiten Gehäuseteil gehalten ist. Um einen besonders festen Halt zwischen der Mischeinrichtung und dem zweiten Gehäuseteil bereitzustellen, kann entlang der Kontur der Aussparung eine Nut ausgebildet werden. Ferner kann der Führungsabschnitt derart geformt sein, dass sich der Führungsabschnitt oder ein Teil des Führungsabschnitts innerhalb der Nut befindet, wenn der Führungsabschnitt mit der Aussparung in Eingriff gebracht ist. Alternativ kann auch entlang der Kontur des Führungsabschnitts eine Nut ausgebildet sein und die Aussparung derart geformt sein, dass sich ein Bereich des zweiten Gehäuseteils im Bereich der Aussparung innerhalb der Nut befindet, wenn der Führungsabschnitt mit der Aussparung in Eingriff gebracht ist. In den vorstehend genannten Beispielen sorgt die Nut für einen besonders festen Halt der Mischeinrichtung. Beispielsweise können die Aussenseiten des Führungsabschnitts und des zweiten Gehäuseteils derart geformt sein, dass die Aussenseite des Führungsabschnittes zumindest abschnittsweise mit der Aussenseite des zweiten Gehäuseteils bündig abschliesst.

Bei einer weiteren Variante der vorstehend genannten Ausführungsform umfasst die Milchleitung einen Endabschnitt mit einer Eingangsöffnung für Milch, wobei der Führungsabschnitt an diesem Endabschnitt angeordnet ist. Diese Variante hat den Vorteil, dass die Mischeinrichtung und das zweite Gehäuseteil besonders Platz sparend ausgebildet sein können.

Vorzugsweise ist das Kaffee-Auslaufrohr in einem Körper enthalten, welcher an einem Endabschnitt eine elektrische Lichtquelle enthält. Somit wird eine optimale Ausleuchtung eines unterhalb der Abgabevorrichtung platzierten Trinkgefässes gewährleistet. Diese Ausleuchtung dient dazu, um den Benutzer insbesondere in einer dunklen Umgebung dabei zu unterstützen, das Trinkgefäss derart korrekt zu platzieren, dass das ausgelassene Getränk ausschliesslich in das Trinkgefäss fliesst. Die elektrische Lichtquelle ist mit elektrischen Leitern verbunden, die innerhalb des Körpers, welcher das Kaffeerohr enthält, verlaufen und innerhalb des ersten Gehäuseteils geführt und gehalten sind. Bei einer Trennung des zweiten Gehäuseteils vom dem ersten Gehäuseteil sind somit vorteilhafterweise keine elektrischen Leiter freigelegt, welche gegebenenfalls beschädigt werden können. Die elektrischen Leiter zur Versorgung der elektrischen Lichtquelle sind deshalb vor Beschädigungen durch mechanische Belastungen geschützt.

Eine weitere Ausführungsform der Abgabevorrichtung ist derart ausgebildet, dass das zweite Gehäuseteil eine erste Öffnung enthält, durch welche ein Endabschnitt des Auslaufrohrs zur Abgabe von Milch und/oder Milchschaum steckbar ist, und eine zweite Öffnung enthält, durch welche ein Endabschnitt des Kaffee-Auslaufrohrs steckbar ist. Hierbei sind die Positionen und Umfänge des Auslaufrohrs zur Abgabe von Milch und/oder Milchschaum und Kaffee-Auslaufrohrs und zudem die Positionen und Umfänge der beiden Öffnungen derart gewählt, dass sich die Mischeinrichtung nur bei einer exakten Positionierung in Relation zu dem zweiten Gehäuseteil in die jeweilige Öffnung einstecken lässt. Zudem wird somit ermöglicht, dass sich das erste Gehäuseteil und das zweite Gehäuseteil nur zusammenstecken lassen, wenn die Mischeinrichtung relativ zum ersten Gehäuseteil und zum zweiten Gehäuseteil korrekt positioniert ist.

Die oben genannte Aufgabe lässt sich ebenfalls durch ein Verfahren zum Zusammensetzen der oben genannten erfindungsgemässen Abgabevorrichtung gemäss Anspruch 13 lösen.

Dieses Verfahren enthält die Schritte: Einsetzen der Mischeinrichtung in das zweite Gehäuseteil und Zusammenstecken des zweiten Gehäuseteils und des ersten Gehäuseteils. Hierdurch lässt sich die Abgabevorrichtung zum Reinigen der Mischeinrichtung schnell und einfach in wenige Einzelteile zerlegen. Zudem lässt sich die Abgabevorrichtung nach der Reinigung der Mischeinrichtung sehr schnell und fehlerfrei wieder zusammensetzen.

Vorzugsweise wird die Mischeinrichtung derart in das zweite Gehäuseteil eingesetzt, dass ein Endabschnitt des Auslaufrohrs zur Abgabe von Milch und/oder Milchschaum durch eine Öffnung geführt wird, welche im zweiten Gehäuseteil ausgebildet ist. Hierdurch kann die Mischeinrichtung schnell und einfach, bei intuitiv korrekter Positionierung, beim Zusammenbau der Abgabevorrichtung in das zweite Gehäuseteil eingesetzt werden.

Vorzugsweise wird die Mischeinrichtung derart in das zweite Gehäuseteil eingesetzt, dass ein an der Mischeinrichtung angebrachter Führungsabschnitt mit einer an dem zweiten Gehäuseteil ausgebildeten Aussparung im festen Eingriff gebracht wird. Somit wird vorteilhafterweise sichergestellt, dass die Mischeinrichtung stets korrekt in das zweite Gehäuseteil eingesetzt wird. Zudem kann die Mischeinrichtung ohne Zuhilfenahme von weiteren Befestigungseinrichtungen durch das zweite Gehäuseteil dauerhaft gehalten werden. Beispielsweise kann die Aussenseite des Führungsabschnittes im eingesetzten Zustand zumindest abschnittsweise mit der Aussenseite des zweiten Gehäuseteils bündig abschliessen.

Vorzugsweise wird das zweite Gehäuseteil derart auf das erste Gehäuseteil aufgesteckt, dass zumindest ein Führungselement, welches an dem ersten Gehäuseteil ausgebildet ist mit einem an dem anderen Gehäuseteil ausgebildeten Gegenführungselement in Eingriff gebracht wird. Somit wird vermieden, dass das erste und das zweite Gehäuseteil versehentlich falsch montiert bzw. zusammengesetzt werden.

Vorzugsweise wird beim Zusammenstecken des zweiten Gehäuseteils und des ersten Gehäuseteils das Kaffee-Auslaufrohr mit einer Führungseinrichtung, welche an dem zweiten Gehäuseteil ausgebildet ist, zumindest abschnittsweise in Eingriff gebracht. Somit kann das zweite Gehäuseteil schnell und einfach auf das erste Gehäuseteil aufgesteckt werden, wobei das zweite Gehäuseteil im Verlaufe dieses Aufsteckens abschnittsweise geführt wird. Dadurch wird eine fehlerhafte Montage der Abgabevorrichtung vermieden.

Die erfindungsgemässe Abgabevorrichtung lässt sich in einer Getränkebereitungsmaschine zur Zubereitung von Kaffeespezialitäten verwenden.

Weitere Einzelheiten der Erfindung und insbesondere beispielhafte Ausführungsformen der erfindungsgemässen Abgabevorrichtung werden im Folgenden anhand der beigefügten Zeichnungen erläutert. Es zeigen:
- Fig. 1A,1B: eine Abgabevorrichtung gemäss der Erfindung, mit einem Kaffee-Auslaufrohr, einer Mischeinrichtung zum Mischen von Milch mit Dampf und/oder Luft und mit einem aus einem ersten und einem zweiten Gehäuseteil zusammensetzbaren Gehäuse, wobei die Gehäuseteile voneinander getrennt sind;
- Fig. 2: eine perspektivische Draufsicht auf das zweite Gehäuseteil gemäss Fig. 1A, 1B;

- Fig. 3: eine Ansicht der Abgabevorrichtung gemäss Fig. 1A, wobei das erste und das zweite Gehäuseteil zusammengesteckt sind, in einer Froschperspektive;
- Fig. 4: eine Schnittansicht der Abgabevorrichtung gemäss Fig. 3;
- Fig. 5: eine Mischeinrichtung und das zweite Gehäuseteil gemäss Fig. 1A, wobei die Mischeinrichtung aus dem zweiten Gehäuseteil entnommen ist;
- Fig. 6A,6B: die Abgabevorrichtung im zusammengesetzten Zustand, wobei die Abgabevorrichtung an einer Getränkebereitungsmaschine angebracht ist; und
- Fig. 7: die in Fig. 6A und 6B dargestellte Abgabevorrichtung, wobei das zweite Gehäuseteil vom ersten Gehäuseteil separiert ist.

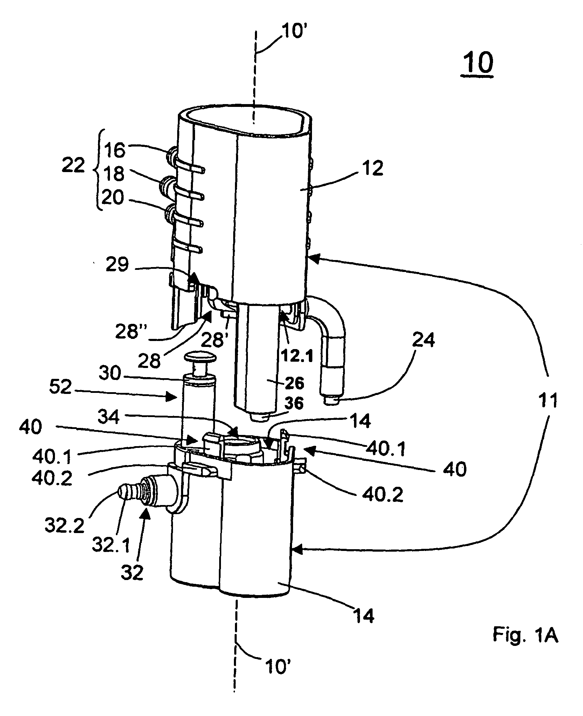

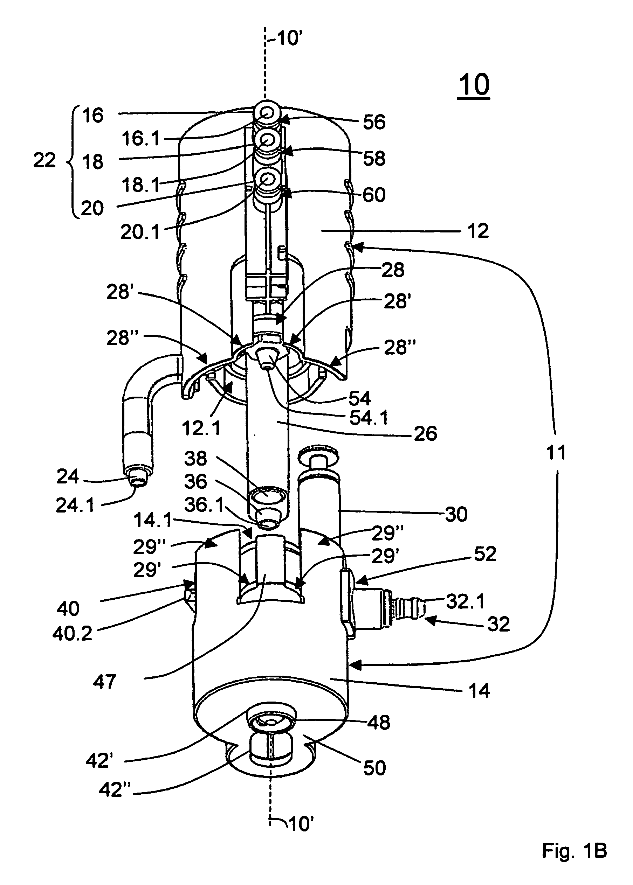

Fig. 1A und 1B zeigen eine Abgabevorrichtung 10 zur Abgabe von Kaffee und/oder Milch und/oder Milchschaum und Heisswasser. Wie Fig. 1A und 1B andeuten, weist die Abgabevorrichtung 10 eine Längsachse 10' auf, welche (wie in Fig. 1A und 1B angedeutet) bevorzugt parallel zu einer Vertikalen ausgerichtet ist. Die Abgabevorrichtung 10 umfasst u.a. ein Gehäuse 11, welches aus einem ersten (oberen) Gehäuseteil 12 und einem zweiten (unteren) Gehäuseteil 14 zusammengesetzt ist. Wie im Folgenden noch näher erläutert wird, können die beiden Gehäuseteile 12 und 14 derart zusammengesteckt werden, dass das zweite Gehäuseteil 14 lösbar an dem ersten Gehäuseteil 12 gehalten wird. Im Falle der Fig. 1A und 1B ist das Gehäuse 11 in einer Situation dargestellt, in welcher das erste Gehäuseteil 12 und das zweite Gehäuseteil 14 voneinander getrennt sind. Das erste Gehäuseteil 12 kann (gegebenenfalls höhenverstellbar) an einer (in Fig. 1A und 1B nicht gezeigten) Getränkebereitungsmaschine angebracht sein.

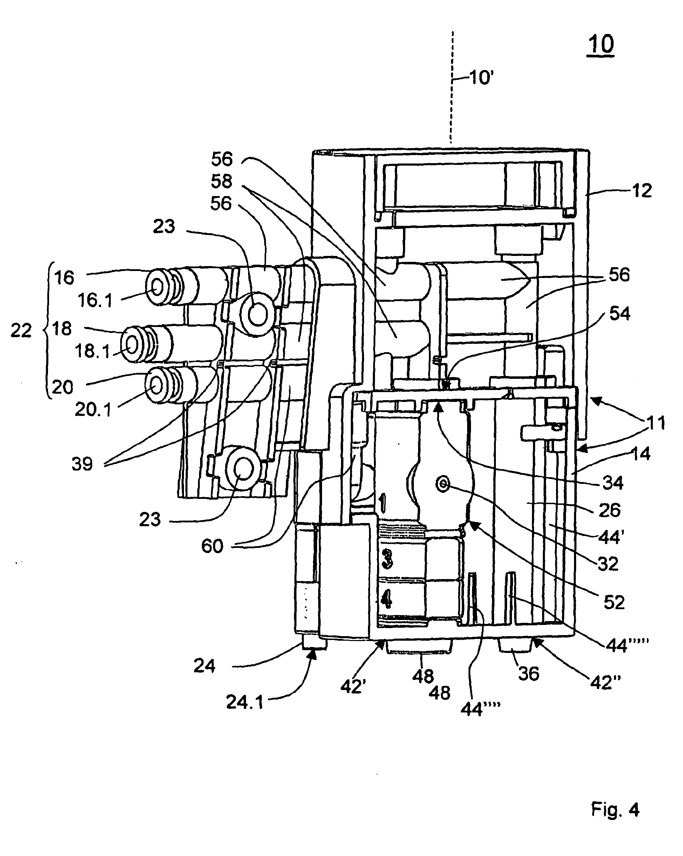

Wie Fig. 1A, 1B und 4 andeuten, umfasst die Abgabevorrichtung 10 eine Gruppe 22 von mehreren Fluidleitungen (im Folgenden "Fluidleitungsgruppe 22" genannt): eine erste Fluidleitung 56 für Kaffee, eine zweite Fluidleitung 58 für Dampf und eine dritte Fluidleitung 60 für Heisswasser. Wie Fig. 1A, 1B und 4 weiterhin entnehmbar ist, weist das erste Gehäuseteil 12 einen Innenraum 12.1 auf. Die Fluidleitungen 56, 58 und 60 verlaufen zumindest abschnittsweise durch diesen Innenraum 12.1. Weiterhin weisen die Fluidleitungen 56, 58 und 60 jeweils einen Endabschnitt mit einer Eingangsöffnung für ein Fluid auf, welche Eingangsöffnung von einer Aussenseite des ersten Gehäuseteils 12 her zugänglich ist, sodass die jeweiligen Fluidleitungen 56, 58 bzw. 60 über die jeweiligen Eingangsöffnungen mit dem jeweiligen Fluid (Kaffee, Dampf bzw. Heisswasser) versorgt werden können: Die erste Fluidleitung 56 weist beispielsweise einen von dem ersten Gehäuseteil 12 abstehenden, eine Eingangsöffnung 16.1 für Kaffee aufweisenden Endabschnitt 16 auf, an welchen eine Leitung zur Zufuhr von Kaffee angeschlossen werden kann. Entsprechend weist die zweite Fluidleitung 58 einen von dem ersten Gehäuseteil 12 abstehenden, eine Eingangsöffnung 18.1 für Dampf aufweisenden Endabschnitt 18 auf, an welchen eine Leitung zur Zufuhr von Dampf angeschlossen werden kann. Entsprechend weist die dritte Fluidleitung 60 einen von dem ersten Gehäuseteil 12 abstehenden, eine Eingangsöffnung 20.1 für Heisswasser aufweisenden Endabschnitt 20 auf, an welchen eine Leitung zur Zufuhr von Heisswasser angeschlossen werden kann.

Wie Fig. 1A und 4 andeuten, mündet die erste Fluidleitung 56 in ein Kaffeeauslaufrohr 36, welches in einem stabförmigen, vom ersten Gehäuseteil 12 geradlinig abstehenden Körper 26 ausgebildet ist und an einem Endabschnitt des Körpers 26 eine Austrittsöffnung 36.1 für Kaffee aufweist.

Wie Fig. 1B und 4 andeuten, mündet die zweite Fluidleitung 58 an einem von der Eingangsöffnung 18.1 entfernten Ende in eine Dampfdüse 54, welche eine Austrittsöffnung 54.1 für Dampf umfasst.

Die oben erwähnte dritte Fluidleitung 60 mündet in einem Heisswasser-Auslaufrohr 24, welches an einem Endabschnitt eine Austrittsöffnung 24.1 für Heisswasser aufweist. Wie Fig. 1A und 1B andeuten, sind das Kaffeeauslaufrohr 36 und das Heisswasser-Auslaufrohr 24 bevorzugt jeweils in einem an die jeweils Austrittsöffnung 36.1 bzw. 24.1 angrenzenden Bereich parallel zu einer Vertikalen angeordnet, um einen möglichst ungestörten Fluss von Kaffee aus der Austrittsöffnung 36.1 bzw. von Heisswasser aus der Austrittsöffnung 24.1 zu ermöglichen. Somit kann ein unterhalb der Abgabevorrichtung 10 platziertes Trinkgefäss (nicht gezeigt) alternativ Kaffee aus dem Kaffeeauslaufrohr 36 oder Heisswasser (beispielsweise zur Zubereitung eines Teegetränkes) aus dem Heisswasser-Auslaufrohr 24 aufnehmen.

Das erste Gehäuseteil 12 und das zweite Gehäuseteil 14 können zu einer Einheit zusammengesteckt werden, indem das zweite Gehäuseteil 14 parallel zur Längsachse 10' in Richtung auf das erste Gehäuseteil 12 bewegt wird. Um zu erreichen, dass das erste Gehäuseteil 12 und das zweite Gehäuseteil 14 immer korrekt zusammengesteckt werden, ist ein Bereich des ersten Gehäuseteils 12 als ein Führungselement ausgebildet, welches das zweite Gehäuseteil 14 beim Zusammenstecken parallel zur Längsachse 10' führt: Wie die Fig. 1A und 1B andeuten, weist das erste Gehäuseteil 12 in einem Bereich unterhalb der Eingangsöffnungen 16.1 bzw. 18.1 bzw. 20.1 der Fluidleitungsgruppe 22 einen sich parallel zur Längsachse 10' erstreckenden Schlitz 28 und auf beiden Seiten neben dem Schlitz je zwei nebeneinander angeordnete, sich ebenfalls parallel zur Längsachse 10' erstreckende und innerhalb einer zur Längsachse 10' senkrechten Ebene konvex gekrümmte Wandbereiche 28' und 28" auf. Der Schlitz 28 und die Wandbereiche 28' und 28" haben die Funktion einer Linearführung, welche es ermöglicht, das zweite Gehäuseteil 14 parallel zur Längsachse 10' (linear) zu führen, wenn das zweite Gehäuseteil 14 und das erste Gehäuseteil 12 zusammengesteckt werden sollen. Wie Fig. 1B andeutet, umfasst das zweite Gehäuseteil 14 je zwei Wandbereiche 29', deren Aussenseite jeweils komplementär zu der Innenseite des jeweiligen Wandbereichs 28' des ersten Wandteils 12 ausgebildet ist, und je zwei Wandbereiche 29", deren Aussenseite jeweils komplementär zu der Innenseite des jeweiligen Wandbereichs 28" des ersten Wandteils 12 ausgebildet ist.

Wie Fig. 1B andeutet, umfasst das zweite Gehäuseteil 14 einen sich parallel zur Längsachse 10' erstreckenden Steg 47, welcher komplementär zum Schlitz 28 ausgebildet ist: Der Steg 47 ist derart bemessen, dass er parallel zur Längsachse 10' in den Schlitz 28 eingeführt werden kann und innerhalb des Schlitzes parallel zur Längsachse 10' geführt ist. Um das erste Gehäuseteil 12 und das zweite Gehäuseteil 14 zusammenstecken zu können, muss die Aussenseite des jeweiligen Wandbereichs 29" des zweiten Gehäuseteils 14 mit der Innenseite des jeweiligen Wandbereichs 28" des ersten Gehäuseteils 12 und die Aussenseite des jeweiligen Wandbereichs 29' des zweiten Gehäuseteils 14 mit der Innenseite des jeweiligen Wandbereichs 28' des ersten Gehäuseteils 12 in Kontakt gebracht werden. Weiterhin muss der Steg 47 des zweiten Gehäuseteils 14 in den Schlitz 28 im ersten Gehäuseteil 12 eingeführt werden. Nur wenn die Wandbereiche 28', 28", 29' und 29', der Schlitz 28 und der Steg 47 wie vorstehend genannt relativ zueinander angeordnet sind, ist es möglich, das erste Gehäuseteil 12 und das zweite Gehäuseteil 14 zusammenzustecken. In diesem Zusammenhang können die Wandbereiche 28' und 28" und der Schlitz 28 als Führungselemente des ersten Gehäuseteils 12 und die Wandbereiche 29' und 29'und der Steg 47 als (komplementäre) Gegenführungselemente des zweiten Gehäuseteils 14 angesehen werden. Die genannten Führungs- bzw. Gegenführungselemente sind jeweils derart angeordnet, dass ein versehentlich fehlerhafter Zusammenbau des zweiten Gehäuseteils 14 mit dem ersten Gehäuseteil 12 vermieden wird.

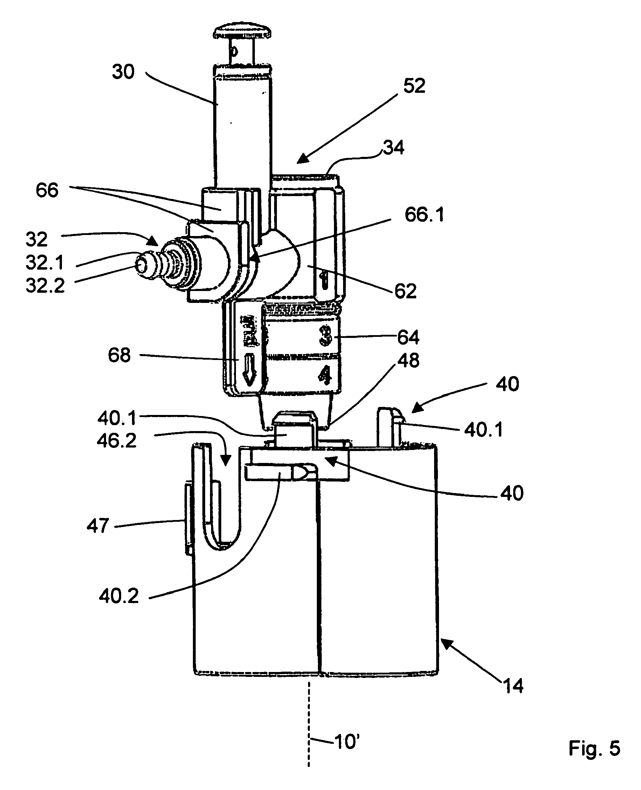

Wie Fig. 1A und 1B weiterhin andeuten, enthält das zweite Gehäuseteil 14 eine Mischeinrichtung 52 zum Mischen von Milch mit Dampf und/oder Luft, welche von oben in eine im zweiten Gehäuseteil 14 ausgebildete Ausnehmung 14.1 gesteckt werden kann. Die Mischeinrichtung 52 ist in Fig. 1A und 1B nur teilweise erkennbar und wird später (insbesondere im Zusammenhang mit den Fig. 4 und 5) noch detaillierter erläutert. Wie Fig. 1A und 1B andeuten, umfasst die Mischeinrichtung 52 eine Eintrittsöffnung 34 für Dampf, einen Luft-Ansaugstutzen mit einer Luftleitung 30 zum Ansaugen von Luft, und eine Milchleitung 32 zur Zufuhr von Milch, welche Milchleitung ein Endstück 32.1 mit einer Eingangsöffnung 32.2 für Milch aufweist. Ferner enthält die Mischeinrichtung eine Kammer (nicht gezeigt), welche mit der Luftleitung 30, der Milchleitung 32 und der Eintrittsöffnung 34 in Fluidverbindung steht. Um der Mischvorrichtung 52 Dampf zuzuführen, kann die Eintrittsöffnung 34 - wie im Folgenden näher erläutert wird - auf die Dampfdüse 52 gesteckt werden. Wird somit über die Eintrittsöffnung 34 ein Dampf in die Kammer zugeführt, so wird in der Kammer gemäss dem Venturi-Prinzip ein Unterdruck erzeugt. Dieser Unterdruck sorgt dann dafür, dass Milch, welche beispielsweise in einem (nicht gezeigten) Milch-Vorratsbehälter bereitgestellt sein kann, über die Milchleitung 32 angesaugt wird. Zudem wird Aussenluft über die Luftleitung 30 angesaugt. In der Mischvorrichtung 52 bildet sich eine Mischung aus Dampf, Milch und Luft, welche erwärmte Milch und/oder Milchschaum enthält und über ein Auslaufrohr 48 der Mischvorrichtung 52 abgegeben werden kann.

Das zweite Gehäuseteil 14 kann mithilfe von Schnappverbindungseinrichtungen 40 lösbar mit dem ersten Gehäuseteil 12 verbunden werden. Die jeweilige Schnappverbindungseinrichtung 40 umfasst eine Sperrklinke 40.1, welche durch Betätigen einer von der Aussenseite der Abgabevorrichtung 10 her zugänglichen Taste 40.2 aus einer Ruhelage ausgelenkt werden kann. An der Innenseite des ersten Gehäuseteils 12 sind entsprechende geformte Ineingriffnahmesektionen (beispielsweise in Form einer in den Figuren nicht gezeigten Ausnehmung) ausgebildet, mit welchen die Sperrklinken 40.1 der jeweiligen Schnappverbindungseinrichtungen 40 fest in Eingriff stehen können, um das zweite Gehäuseteil 14 am ersten Gehäuseteil 12 zu halten. Wie Fig. 1A andeutet, weist das erste Gehäuseteil 12 am unteren Rand Ausnehmungen 29 auf, welche sich in Richtung der Längsachse 10' erstrecken und derart geformt und angeordnet sind, dass jeweils eine Ausnehmung 29 eine Taste 40.2 einer der jeweiligen Schnappverbindungseinrichtungen 40 aufnehmen kann, wenn das erste Gehäuseteil 12 und das zweite Gehäuseteil 14 zusammengesteckt werden. Die jeweiligen Ausnehmungen 29 dienen demnach ebenfalls als Führungselemente, welche das zweite Gehäuseteil 14 (mittels der jeweiligen Taste 40.2) in Richtung der Längsachse 10' führen können und verhindern, dass das erste Gehäuseteil 12 und das zweite Gehäuseteil 14 fehlerhaft zusammengesteckt werden können.

Figur 1B zeigt die in Figur 1A dargestellte Abgabevorrichtung 10 in einer um 180° um die Längsachse 10' verdrehten Stellung aus einer Ansicht von schräg unten. In dieser Ansicht sind das Kaffee-Auslaufrohr 36 und insbesondere die Anordnung der Austrittsöffnung 36.1 für Kaffee an einem Endabschnitt des Körpers 26 zu erkennen. Weiterhin ist neben der Austrittsöffnung 36.1 eine elektrische Lichtquelle 38 an dem Endabschnitt des Körpers 26 zu erkennen. Das zweite Gehäuseteil 14 enthält an einer Unterseite 50 zwei Öffnungen 42', 42" . Durch die erste Öffnung 42' ist ein Endabschnitt des Auslaufrohrs 48 der Mischvorrichtung 52 hindurch gesteckt. Durch die zweite Öffnung 42" ist der Endabschnitt des Körpers 26 (zusammen mit der Austrittsöffnung 36.1 und der elektrischen Lichtquelle 38) steckbar.

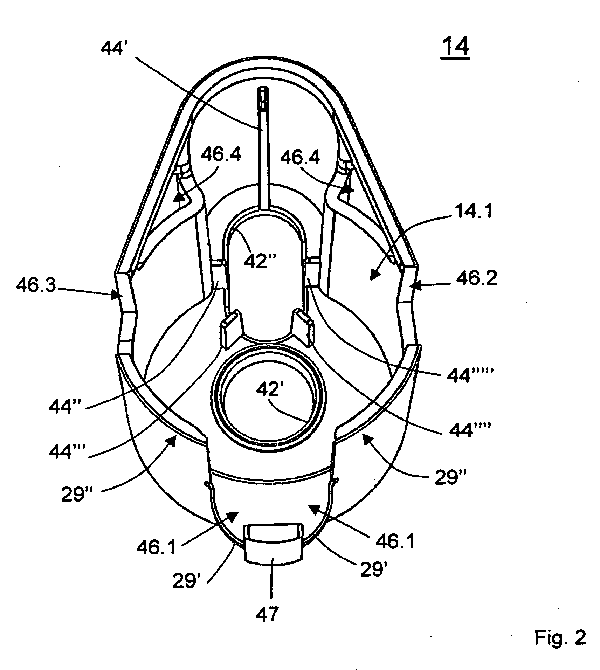

Figur 2 zeigt eine perspektivische Draufsicht auf das zweite Gehäuseteil 14. Wie ersichtlich umfasst das zweite Gehäuseteil 14 eine Ausnehmung 14.1, welche Raum zur Aufnahme der Mischeinrichtung 52 (nicht dargestellt) und des Körpers 26 (nicht dargestellt) bietet. In Fig. 2 erkennbar sind die erste Öffnung 42', welche mittig angeordnet ist, und die zweite Öffnung 42", welche dazu versetzt angeordnet ist. Durch die erste Öffnung 42' ist ein Endabschnitt des Auslaufrohrs 48 der Mischvorrichtung 52 (nicht gezeigt) steckbar. Durch die zweite Öffnung 42" ist der Endabschnitt des Körpers 26 (nicht gezeigt) steckbar. Am Rande der zweiten Öffnung 42" sind Führungsrippen 44'-44"'" angebracht, welche den Endabschnitt des Körpers 26 beim Zusammenstecken des zweiten Gehäuseteils 14 und des ersten Gehäuseteils 12 führen. Wie Fig. 2 zeigt, weist das zweite Gehäuseteil 14 am oberen Rand mehrere Aussparungen 46.1-46.4 auf. Die beiden Aussparungen 46.1 korrespondieren mit den beiden Wandbereichen 28' des ersten Gehäuseteils und bieten Platz zur Aufnahme jeweils eines der Wandbereiche 28', wenn das erste Gehäuseteil 12 und das zweite Gehäuseteil 14 entlang der Längsachse 10' zusammengesteckt werden. Die Ausnehmung 46.2 dient der Durchführung der Milchleitung 32 der Mischeinrichtung 52 für den Fall, dass die Mischeinrichtung 52 in die Ausnehmung 14.1 eingesetzt ist (wie in Fig. 1A und 1B dargestellt). Die Ausnehmung 46.3 bietet Platz zur Aufnahme des Heisswasser-Auslaufrohrs 24 für den Fall, dass das erste Gehäuseteil 12 und das zweite Gehäuseteil 14 zusammengesteckt sind. Jede der Ausnehmungen 46.4 bietet Platz zur Aufnahme einer Taste 40.2 einer der Schnappverbindungseinrichtungen 40 (nicht dargestellt).

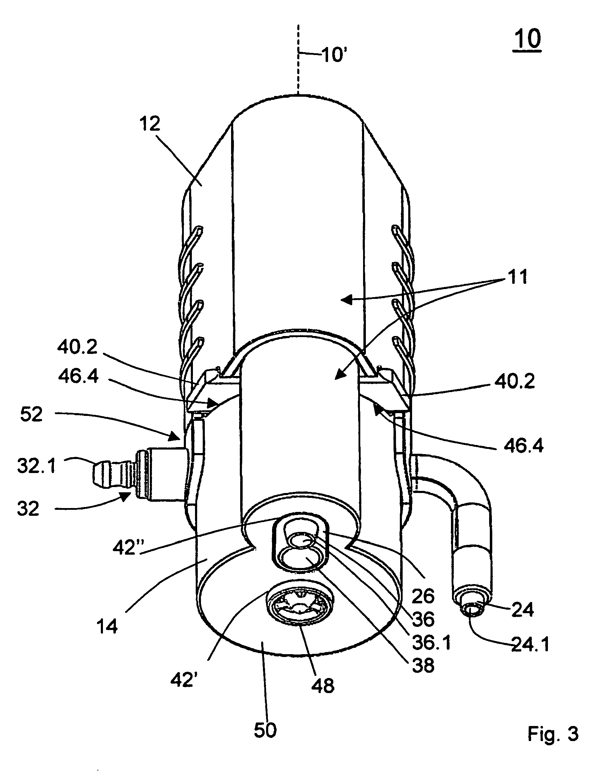

Figur 3 zeigt eine Ansicht der Abgabevorrichtung 10 in einer Froschperspektive. In dieser Darstellung sind das erste Gehäuseteil 12 und das zweite Gehäuseteil 14 im zusammengesteckten Zustand, wobei die Mischeinrichtung 52 in das erste Gehäuseteil 14 eingesetzt ist. Wie in dieser Darstellung besonders gut zu erkennen, sind die Endabschnitte des Auslaufrohrs 48 für Milch und/oder Milchschaum und des Kaffee-Auslaufrohrs 36 zueinander derart nah angeordnet, dass die herausfliessenden Fluide in ein Trinkgefäss fliessen können, ohne dass dieses an verschiedenen Orten platziert werden muss. Somit können Milchschaum und Kaffee im Wesentlichen zeitgleich abgegeben werden, ohne dass das Trinkgefäss verschoben werden muss. Das Heisswasser-Auslaufrohr 24 ist aus dem ersten Gehäuseteil 12 zunächst waagerecht herausgeführt und dann um 90° nach unten umgelenkt. Aus dem Heisswasser-Auslaufrohr 24 wird eine Heisswasserabgabe zur Zubereitung von beispielsweise Teegetränken bezogen. Die Endabschnitte des Auslaufrohrs 48 und des Körpers 26 sind durch die in Figur 2 dargestellten Öffnungen 42' und 42" an der unteren Seite 50 des zweiten Gehäuseteils 14 geführt. Innerhalb des Körpers 26 verlaufen das Kaffee-Auslaufrohr 36 und elektrische Leitungen (nicht gezeigt) zur elektrischen Versorgung der elektrischen Lichtquelle 38. Diese elektrische Lichtquelle 38, welche eine Lampe oder eine LED sein kann, dient zur Beleuchtung eines unterhalb der Abgabevorrichtung 10 platzierten Trinkgefäss. Somit kann die Getränkeabgabe auch bei geringem Umgebungslicht beobachtet bzw. kontrolliert werden.

Wie oben beschrieben, verbleibt der Körper 26 bei einer Demontage des zweiten Gehäuseteils 14 von dem ersten Gehäuseteil 12 an dem ersten Gehäuseteil 12. Dies hat ebenfalls den Vorteil, dass keine elektrischen Leitungen oder Elemente zum Führen oder Halten der elektrischen Leitungen zur Versorgung der elektrischen Lichtquelle 38 bewegt oder verschoben werden müssen. Somit wird beispielsweise die Wahrscheinlichkeit eines Leitungsbruches der elektrischen Leitungen stark reduziert. Wie Fig. 3 andeutet, ist die Mischvorrichtung 52 im Wesentlichen vollständig von den Gehäuseteilen 12 und 14 umschlossen, abgesehen von dem Endabschnitt 32.1 der Milchleitung 32 und einem Endabschnitt des Körpers 26, welche durch entsprechende Öffnungen bzw. Aussparungen in den jeweiligen Gehäuseteilen ragen. Zur Versorgung mit Milch kann an dem Endabschnitt 32.1 der Milchleitung 32 ein Milchschlauch (nicht gezeigt) angeschlossen werden, welcher an seinem anderen Ende in einen Milch-Vorratsbehälter getaucht ist.

Figur 4 zeigt die Abgabevorrichtung 10 in einer in Längsrichtung geschnittenen Ansicht, welche einen Blick in das Innere der Abgabevorrichtung 10 ermöglicht. In diesem Fall sind das erste Gehäuseteil 12 und das zweite Gehäuseteil 14 derart zusammengesteckt, dass das zweite Gehäuseteil 14 mittels der Schnappverbindungseinrichtungen 40 (in Fig. 4 nicht gezeigt) an dem ersten Gehäuseteil 12 gehalten wird. In Fig. 4 ist insbesondere der Verlauf der bereits erwähnten ersten Fluidleitung 56 für Kaffee, der zweiten Fluidleitung 58 für Dampf und der dritten Fluidleitung 60 für Heisswasser im Innern der Abgabevorrichtung 10 zu erkennen. Weiterhin ist die in das zweite Gehäuseteil 14 eingesetzte Mischeinrichtung 52 zu erkennen. An der Unterseite der Mischeinrichtung 52 ist das Auslaufrohr 48 für Milch und/oder Milchschaum angeordnet, wobei ein Abschnitt des Auslaufrohrs 48 durch die Öffnung 42' ragt. Auf der Oberseite der Mischeinrichtung 52 ist die Eintrittsöffnung 34 für Dampf 52 angeordnet, welche im vorliegenden Fall derart auf die bereits erwähnte Dampfdüse 54 aufgesteckt ist, dass die Eintrittsöffnung 34 mit der Dampfdüse 54 abgedichtet verbunden ist und Dampf aus der zweiten Fluidleitung 58 über die Dampfdüse 54 und die Eintrittsöffnung 34 in die Mischeinrichtung 52 eintreten kann. Um die zweite Fluidleitung 58 mit Dampf zu versorgen, kann an den Endabschnitt 18 der zweiten Fluidleitung 58 eine Dampf-Zufuhrleitung (nicht gezeigt) angeschlossen werden, welche beispielsweise flexibel sein kann. Fig. 4 zeigt ferner die erste Fluidleitung 56, welche mit dem im Körper 26 verlaufenden Kaffee-Auslaufrohr 36 verbunden ist. Beispielsweise können die erste Fluidleitung 56 und der Körper 26 einstückig ausgebildet sein. Im vorliegenden Fall ragt ein Endabschnitt des Kaffee-Auslaufrohrs 36 durch die Öffnung 42" im unteren Teil des zweiten Gehäuseteils 14. Fig. 4 deutet fernen an, dass der Körper 26 mit den Führungsrippen 44', 44'''', 44"'" und den übrigen in Fig. 4 nicht dargestellten Führungsrippen 44" und 44''' (siehe Fig. 2) in Kontakt gebracht ist, sodass der Körper 26 offensichtlich an den Führungsrippen 44' - 44''''' geführt wird, wenn das erste Gehäuseteil 12 und das zweite Gehäuseteil 14 zusammengesteckt werden. Der ausserhalb des ersten Gehäuseteils 12 geführte Abschnitt der ersten Fluidleitung 56 endet - wie bereits erwähnt - in dem Endabschnitt 16, an welchen zur Versorgung der ersten Fluidleitung 56 mit Kaffee eine flexible Leitung zur Zufuhr von Kaffee angeschlossen werden kann. Das erste Gehäuseteil 12 enthält ferner die dritte Fluidleitung 60 für Heisswasser, welche in dem aus dem ersten Gehäuseteil 12 herausgeführten Heisswasser-Auslaufrohr 24 mündet. Der aus dem ersten Gehäuseteil 12 herausgeführte Abschnitt der dritten Fluidleitung 60 enthält an seinem Ende den Endabschnitt 20, an welchen zur Versorgung der dritten Fluidleitung 60 mit Heisswasser eine flexible Leitung zur Zufuhr von Heisswasser angeschlossen werden kann.

Die Fluidleitungsgruppe 22, bestehende aus der ersten Fluidleitung 56, der zweiten Fluidleitung 58 und der dritten Fluidleitung 60, ist ausserhalb des ersten Gehäuseteils 12 zu einer Einheit zusammengefasst, indem die Endabschnitte 16, 18 und 20 der jeweiligen Fluidleitungen 56, 58, 60 untereinander fest verbunden sind. Die Fluidleitungsgruppe 22 ist zudem als Ganzes fest mit dem ersten Gehäuseteil 12 verbunden. Somit können hohe mechanische Belastungen an die Fluidleitungen 56, 58 und 60 und insbesondere die Endabschnitte 16, 18 und 20 angelegt werden, ohne dass es zu einem Bruch kommt. Die Fluidleitungsgruppe 22 enthält ferner Befestigungslöcher 23, über welche die Fluidleitungsgruppe 22 (und somit die gesamte Abgabevorrichtung 10) mit einem Befestigungsabschnitt einer Getränkebereitungsmaschine fest verbunden werden kann (nicht gezeigt). Zur Verbindung können beispielsweise durch die Befestigungslöcher hindurch gesteckte Verbindungsschrauben (nicht gezeigt) dienen. Fig. 4 zeigt weiterhin zwei elektrische Anschlüsse 39, welche nebeneinander zwischen den Endabschnitten 18 und 20 angeordnet sind. Die Anschlüsse 39 sind mit (in Fig. 4 nicht dargestellten) elektrischen Leitungen verbunden, welche durch den Körper 26 zu der (in Fig. 4 nicht dargestellten) elektrischen Lichtquelle 38 (siehe Fig. 1B und 3) führen und zur Versorgung der elektrischen Lichtquelle 38 mit einem elektrischen Strom dienen.

Figur 5 zeigt die Mischeinrichtung 52 und das zweite Gehäuseteil 14 in einem Zustand, in welchem die Mischeinrichtung 52 und das zweite Gehäuseteil 14 voneinander separiert sind, sodass weitere Einzelheiten der Mischeinrichtung 52 und des zweiten Gehäuseteils 14 erkennbar werden. Wie bereits erwähnt, enthält die Mischeinrichtung 52 die nach aussen geführte Milchleitung 32 und die Luftleitung 30, über welche jeweils Milch und Luft zugeführt werden können. Die Milchleitung 32 und die Luftleitung 30 führen (stromabwärts) jeweils in eine Kammer 62. In diese Kammer 62 kann über die bereits erwähnte Eintrittsöffnung 34 Dampf injiziert werden, sofern die bereits erwähnte Dampfdüse 54 in die Eintrittsöffnung 34 gesteckt ist. Um eine besonders druckdichte Verbindung herzustellen, kann die Mischeinrichtung 52 im Bereich der Eintrittsöffnung 34 aus einem elastischen Material, beispielweise Gummi, ausgebildet sein. Die Kammer 62 ist als eine Kammer ausgebildet, innerhalb welcher ein Unterdruck erzeugbar ist. Genauer gesagt, wird innerhalb der Kammer 62 durch die Zufuhr von Dampf über die Dampfdüse 54 und die Eintrittsöffnung 34 gemäss dem Venturi-Prinzip ein Unterdruck erzeugt, sodass Milch und Luft über die Milchleitung 32 bzw. die Luftleitung 30 in die Kammer 62 angesaugt werden, wobei sich Dampf, Milch und Luft in der Kammer 62 mischen. Stromabwärts ist die Kammer 62 mit einer Emulsionskammer 64 verbunden, innerhalb welcher sich ein aus den Bestandteilen Dampf, Milch und Luft erzeugtes Gemisch aus erwärmter Milch und/oder Milchschaum ansammeln kann. Die erwärmte Milch bzw. der Milchschaum kann durch das stromabwärts mit der Emulsionskammer 64 verbundene Auslaufrohr 48 in ein unterhalb der Mischeinrichtung 52 platziertes Trinkgefäss (nicht gezeigt) geleitet werden.

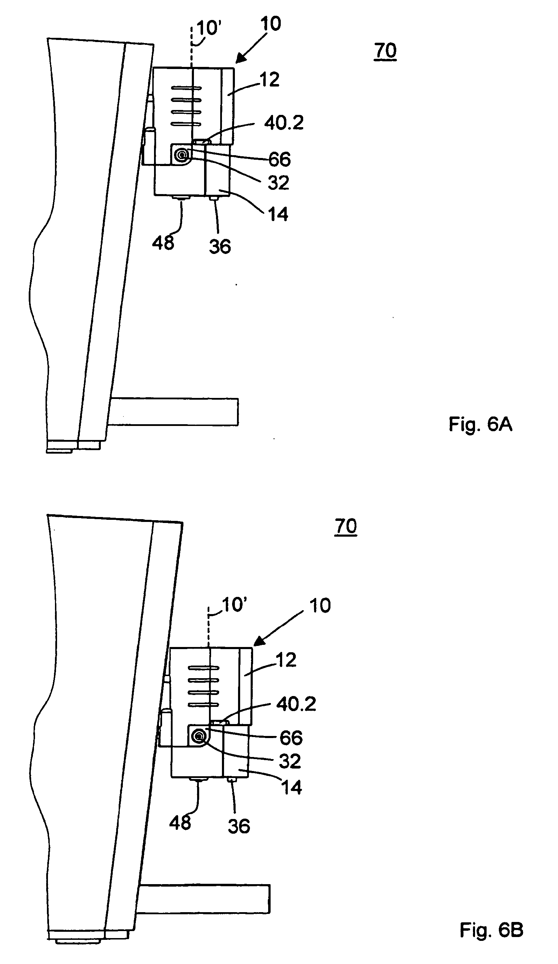

Die Mischeinrichtung 52 enthält einen Führungsabschnitt 66, welcher an einem Abschnitt der Milchleitung 32 und senkrecht hierzu angeformt ist. Dieser Führungsabschnitt 66 ist an seiner Aussenseite in einer Form ausgebildet, welche der Form der am zweiten Gehäuseteil 14 ausgebildeten Aussparung 46.2 (siehe Fig. 2) entspricht. Genauer gesagt, bilden die Aussenseite des Führungsabschnittes 66 und die Aussenseite des zweiten Gehäuseteils 14 eine bündige Aussenfläche aus, wenn die Mischeinrichtung 52 und das zweite Gehäuseteil 14 derart zusammengesteckt werden, dass der Führungsabschnitt 66 in die Aussparung 46.2 eingeführt wird. Wie Fig. 6 andeutet, weist der Führungsabschnitt 66 eine Nut 66.1 auf. Die Nut 66.1 ist derart geformt, dass ein Abschnitt des zweiten Gehäuseteils 14 in die Nut 66.1 eingeführt werden muss und in der Nut 66.1 geführt wird, wenn der Führungsabschnitt 66 entlang der Längsachse 10' in die Aussparung 46.2 geführt wird. Die Formgebung des Führungsabschnitts 66 und die Formgebung der Aussparung 46.2 unterstützen den Benutzer dabei, die Mischeinrichtung 52 korrekt in das zweite Gehäuseteil 14 einzustecken.

In Fig. 5 sind zwei (bereits erwähnte) Schnappverbindungseinrichtungen 40 deutlich zu erkennen, welche an der Oberseite des zweiten Gehäuseteils 14 angeformt sind. Deutlich zu erkennen sind ebenfalls die Sperrklinken 40.1 der jeweiligen Schnappverbindungseinrichtungen 40, welche mit am ersten Gehäuseteil 12 ausgebildeten Ineingriffnahmesektionen in Eingriff gebracht werden können, wenn das zweite Gehäuseteil 14 und das erste Gehäuseteil 12 zusammengesteckt werden. Um die jeweilige Sperrklinke 40.1 wieder von der jeweiligen Ineingriffnahmesektion lösen zu können, enthalten die Schnappverbindungseinrichtungen 40 jeweils eine Taste 40.2. Bei einem Drücken der jeweiligen Taste 40.2 durch einen Benutzer wird die jeweilige Sperrklinke 40.1 in Richtung des Innenraums des zweiten Gehäuseteils 14 bewegt. Durch diese Bewegung wird wiederum eine Ineingriffnahme der jeweiligen Sperrklinke 40.1 in die zugehörige Ineingriffnahmesektion gelöst, woraufhin das zweite Gehäuseteil 14 vom ersten Gehäuseteil 12 getrennt werden kann. Nach diesem Trennen kann die Mischeinrichtung 52 dann schnell und einfach aus dem zweiten Gehäuseteil 14 entnommen werden, indem sie nach oben gezogen wird. Dabei wird die Mischeinrichtung 52 über die jeweilige Verbindung zwischen dem Führungsabschnitt 66 und dem Aussparungsabschnitt 46 parallel zur Längsachse 10' geführt.

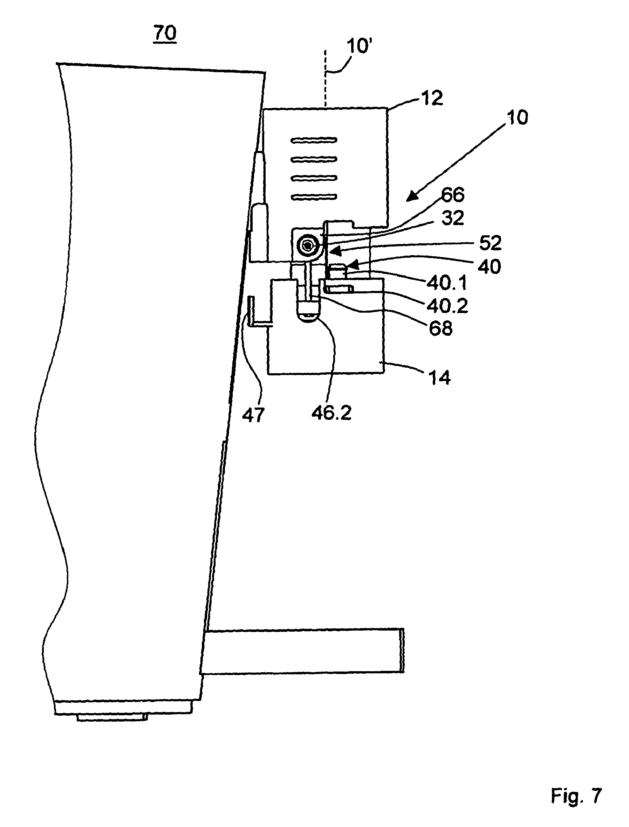

Wie Fig. 5 entnehmbar ist, ist an der Aussenseite der Mischeinrichtung 52 in einem Bereich zwischen dem Führungsabschnitt 66 und dem Auslaufrohr 48 eine (Zug- und/oder Führungs-) Lasche 68 angeformt. Die Lasche 68 dient beispielsweise als Handgriff für einen Benutzer und ist beispielsweise nützlich, wenn die Mischeinrichtung 52 (wie in Fig. 4 dargestellt) mit der zweiten Fluidleitung 58 derart verbunden ist, dass die Eintrittsöffnung 34 dicht auf der Dampfdüse 54 sitzt, und die Mischeinrichtung 52 selbst dann an der Dampfdüse 54 haften bleiben sollte, wenn das zweite Gehäuseteil 14 von dem ersten Gehäuseteil 12 separiert und entfernt wird. In dieser Situation kann ein Benutzer die Mischeinrichtung 52 an der Lasche 68 erfassen und manuell aus dem Innenraum 12.1 des ersten Gehäuseteils 12 herausziehen (was im Folgenden im Zusammenhang mit Fig. 7 näher erläutert wird). Weiterhin kann die Lasche 68 auch verwendet werden, um die Mischeinrichtung 52 beim Einsetzen in die Ausnehmung 14.1 in Richtung der Längsachse 10' zu führen. Zu diesem Zweck kann am zweiten Gehäuseteil 14 eine Führung für die Lasche 68 ausgebildet sein, mit welcher Führung die Lasche in Eingriff bringbar ist, beispielsweise eine Führung in Form einer parallel zur Längsachse 10' verlaufenden Nut, in welche die Lasche 68 von oben steckbar ist (in Fig. 1-7 nicht dargestellt). Diese Führung für die Lasche 68 ist vorzugsweise einstückig mit dem Material des zweiten Gehäuseteils 14 ausgebildet. Somit kann der Benutzer schnell, einfach und intuitiv, d.h. ohne eine Zuhilfenahme von Informationsmaterial, beispielsweise einer Gebrauchsanweisung, erkennen, wie die Mischeinrichtung 52 korrekt in das zweite Gehäuseteil 14 einzusetzen ist. Zudem können die Lasche 68 und eine am zweiten Gehäuseteil 14 ausgebildete Führung für die Lasche 68 so geformt und angeordnet werden, dass die Mischeinrichtung 52 fest gehalten ist, wenn die Lasche 68 mit dieser Führung in Eingriff gebracht ist.

Es besteht ein Vorteil darin, dass die Mischeinrichtung 52 schnell, einfach und ohne die Betätigung von Verbindungselementen von dem zweiten Gehäuseteil 14 getrennt werden kann. Ein weiterer Vorteil besteht darin, dass die Mischeinrichtung 52 nach einer Reinigung unter beispielsweise fliessendem Wasser oder nach einer Reinigung mit Hilfe von einer Reinigungsflüssigkeit schnell und einfach wieder in das zweite Gehäuseteil 14 eingesetzt werden kann. Somit sind nur wenige und sehr einfache Schritte nötig, um dieses einzige Bauteil der Abgabevorrichtung 10, welches mit Milch in Kontakt tritt, schnell und gründlich zu reinigen. Durch diese Einfachheit wird der Benutzer vorteilhafterweise dazu angeregt, diese notwendige Reinigung in kurzen Zeitintervallen durchzuführen.

Figuren 6A und 6B zeigen - in einer Seitenansicht - eine Getränkebereitungsmaschine 70 mit Abgabevorrichtung 10, welche an einer Aussenseite eines Gehäuses dieser Getränkebereitungsmaschine 70 angeordnet ist. Die Abgabevorrichtung 10 ist in ihrer Position höhenverstellbar, wobei Figur 6A die Abgabevorrichtung 10 in einer maximal angehobenen Position zeigt und Figur 6B die Abgabevorrichtung 10 in einer maximal abgesenkten Position zeigt. Somit wird einem Benutzer der Getränkebereitungsmaschine 70 ein grosser Verstellbereich der Höhe der Abgabevorrichtung 10 zur Verfügung gestellt, damit Trinkgefässe (nicht angezeigt) unterschiedlicher Höhe verwendet werden können.

Es besteht ein Vorteil darin, dass ein unterhalb der Abgabevorrichtung 10 platziertes Trinkgefäss bei einem gleichzeitigen oder auch zeitlich versetzten Bezug von Kaffee und Milchschaum nicht verschoben zu werden braucht. Dies liegt daran, dass die Endabschnitte des Auslaufrohrs 48 und des Kaffee-Auslaufrohrs 36 sehr nahe zueinander angeordnet sind. Somit fliessen die aus diesen Auslaufrohren 36 und 48 abgegebenen Fluide auch dann in das Trinkgefäss, wenn dieses Trinkgefäss einen kleinen Durchmesser hat.

Figur 7 zeigt die in Fig. 6A und 6B dargestellte Getränkebereitungsmaschine 70 mit der daran höhenverstellbar angebrachten Abgabevorrichtung 10. In dieser Figur ist die Abgabevorrichtung 10 in ihrer maximal angehobenen Position gezeigt. Ferner ist die Abgabevorrichtung 10 in einem Zustand gezeigt, in welchem das zweite Gehäuseteil 14 vom ersten Gehäuseteil 12 getrennt ist. Zu diesem Zweck wurden die Sperrklinke 40.1 der jeweiligen Schnappverbindungseinrichtung 40 durch Betätigen der jeweiligen Taste 40.2 von dem ersten Gehäuseteil 12 gelöst, sodass das zweite Gehäuseteil 14 relativ zum ersten Gehäuseteil 12 parallel zur Längsachse 10' nach unten bewegt werden kann. In der Ansicht gemäss Fig. 7 sind die beiden Gehäuseteile 12, 14 um eine gewisse Distanz in senkrechter Richtung getrennt. Wie in dieser Ansicht zu erkennen, verbleibt die Mischeinrichtung 52 an dem ersten Gehäuseteil 12, zumal in dem dargestellten Zustand die Eintrittsöffnung 34 der Mischeinrichtung 52 - wie im Zusammenhang mit Fig. 4 und 5 erläutert wurde - dicht mit der Dampfdüse 54 der Abgabevorrichtung 10 verbunden ist und somit an der Dampfdüse 54 haften kann, wenn das zweite Gehäuseteil 14 nach unten bewegt wird. Wenn unter diesen Umständen das zweite Gehäuseteil 14 relativ zum ersten Gehäuseteil 12 nach unten bewegt wird, wird das zweite Gehäuseteil 14 an den Führungselementen des ersten Gehäuseteils 12 und der Mischeinrichtung 52 (d.h. insbesondere an dem Schlitz 28, den Wandabschnitten 28' und 28" und dem Körper 26 des ersten Gehäuseteils 12 und dem Führungsabschnitt 66 und der Lasche 68 der Mischeinrichtung 52) geführt, bis die entsprechenden Gegenführungselemente des zweiten Gehäuseteils 14 (d.h. insbesondere der Steg 47, die Wandabschnitte 29' und 29'', die Führungsrippen 44'-44''''' und die Aussparung 46.2) von den genannten Führungselementen des ersten Gehäuseteils 12 und der Mischeinrichtung 52 getrennt sind.

Nachdem das zweite Gehäuseteil 14 vollständig von dem ersten Gehäuseteil 12 separiert ist, kann die Mischeinrichtung 52 an der Lasche 68 erfasst und aus dem ersten Gehäuseteil 12 nach unten herausgezogen werden, um anschliessend einer Reinigung zugeführt zu werden. Im Verlaufe dieser Reinigung werden Milch und Milchreste, welche an bestimmten Bereichen der Mischeinrichtung 52 anhaften, gelöst und entfernt. Nach der Reinigung wird die Mischeinrichtung 52 in das zweite Gehäuseteil 14 eingesteckt. Anschliessend wird dieses zweite Gehäuseteil 14 auf das erste Gehäuseteil 12 aufgesteckt und mit den Schnappverbindungseinrichtungen 40 an dem ersten Gehäuseteil 12 gehalten. Dabei wird die Mischeinrichtung 52 automatisch in eine Stellung relativ zur zweiten Fluidleitung 58 bzw. zur Dampfdüse 54 gebracht, in welcher Stellung eine Fluidverbindung zwischen der Austrittsöffnung 54.1 der zweiten Fluidleitung 58 bzw. der Dampfdüse 54 und der Eintrittsöffnung 34 (für Dampf) der Mischeinrichtung 52 hergestellt ist. Somit sind nur sehr wenige Schritte nötig um die Mischeinrichtung 52 einer Reinigung zuzuführen. Zudem erschliessen sich diese Schritte dem Benutzer intuitiv ohne eine Zuhilfenahme von Informationsmaterial. Dadurch wird der Benutzer vorteilhafterweise dazu angeregt, diese notwendigen Massnahmen zum Reinigen der Mischeinrichtung 52 in kurzen Zeitintervallen durchzuführen.

Im Falle der in Fig. 1-7 dargestellten Abgabevorrichtung 10 mündet die erste Fluidleitung 56 in ein Kaffee-Auslaufrohr 36, welches in dem Körper 26 ausgebildet ist und an einem Endabschnitt eine Austrittsöffnung 36.1 für Kaffee aufweist. Alternativ könnten in dem Körper 26 auch mehrere (beispielsweise zwei) Kaffee-Auslaufrohre ausgebildet sein, welche zur Versorgung mit Kaffee jeweils mit der ersten Fluidleitung 56 verbunden sein können und im Körper 26 beispielsweise parallel zueinander verlaufen können. Ausserdem kann das jeweilige Kaffee-Auslaufrohr auch mehrere Austrittsöffnungen für Kaffee aufweisen.

Weiterhin kann die Mischvorrichtung 52 auch ein verstellbares Ventil aufweisen, mit welchem die Zufuhr von Milch über die Milchleitung 32 in die Kammer 62 und/oder die Zufuhr von Luft über die Luftleitung 30 in die Kammer 62 reguliert werden kann. Mithilfe dieses Ventils kann das Mischungsverhältnis zwischen Luft und Milch variiert werden, um wahlweise erhitzte Milch (ohne eine Beimischung von Luft) oder Milchschaum (mit einer Beimischung von Luft) erzeugen zu können.

## Patentansprüche

1. Abgabevorrichtung (10) zur Abgabe von Kaffee und/oder Milch und/oder Milchschaum, welche umfasst:
a) eine Fluidleitungsgruppe (22) zur Zufuhr von mehreren Fluiden, welche Fluidleitungsgruppe (22) mindestens eine erste Fluidleitung (56) zur Zufuhr von Kaffee und eine zweite Fluidleitung (58) zur Zufuhr von Dampf umfasst, wobei die erste Fluidleitung (56) in mindestens ein Kaffee-Auslaufrohr (36) mündet und die zweite Fluidleitung (58) eine Austrittsöffnung (54.1) für den Dampf aufweist,
b) eine Mischeinrichtung (52) zum Mischen von Milch mit Dampf und/oder Luft, welche Mischeinrichtung (52)
eine Kammer (62),
eine Milchleitung (32) zur Zufuhr von Milch in die Kammer (62),
eine Luftleitung zur Zufuhr von Luft in die Kammer (62), eine Eintrittsöffnung (34) zur Zufuhr von Dampf in die Kammer (62) und
ein Auslaufrohr (48) zur Abgabe von Milch und/oder Milchschaum aus der Kammer (62) umfasst,
c) ein Gehäuse (11), welches die Fluidleitungsgruppe (22), das jeweilige Kaffee-Auslaufrohr (36) und die Mischeinrichtung (52) mindestens teilweise umgibt,
wobei die Mischeinrichtung (52) in eine erste vorgegebene Stellung relativ zur zweiten Fluidleitung (58) bringbar ist, in welcher Stellung eine Fluidverbindung zwischen der Austrittsöffnung (54.1) der zweiten Fluidleitung (58) und der Eintrittsöffnung (34) der Mischeinrichtung (52) zur Zufuhr von Dampf in die Kammer (62) hergestellt ist,
**dadurch gekennzeichnet, dass**
d) das Gehäuse (11) zumindest ein erstes Gehäuseteil (12) und ein zweites Gehäuseteil (14) umfasst,
e) die Fluidleitungsgruppe (22) am ersten Gehäuseteil (12) angeordnet oder im ersten Gehäuseteil ausgebildet ist,
f) im zweiten Gehäuseteil (14) eine Ausnehmung (14.1) zur Aufnahme der Mischeinrichtung (52) ausgebildet ist, in welche Ausnehmung die Mischeinrichtung (52) derart steckbar ist, dass die Mischeinrichtung (52) in einer zweiten vorgegebenen Stellung relativ zum zweiten Gehäuseteil (14) gehalten ist, und
h) das erste Gehäuseteil (12) und das zweite Gehäuseteil (14) derart zusammensteckbar sind, dass, falls die Mischeinrichtung (52) in die Ausnehmung (14.1) im zweiten Gehäuseteil (14) aufgenommen ist, die Mischeinrichtung (52) die erste vorgegebene Stellung relativ zur zweiten Fluidleitung (58) einnimmmt.

2. Abgabevorrichtung (10) nach Anspruch 1, bei welcher die Fluidleitungsgruppe (22) ferner eine dritte Fluidleitung (60) zur Zufuhr von Heisswasser enthält, welche in ein aus dem ersten Gehäuseteil (12) herausgeführtes Heisswasser-Auslaufrohr (24) mündet.

3. Abgabevorrichtung (10) nach einem der vorhergehenden Ansprüche, bei welcher das erste Gehäuseteil (12) zumindest ein Führungselement (28, 29) und das zweite Gehäuseteil (14) ein Gegenführungselement (47, 40.2) umfasst, wobei beim Zusammenstecken des ersten Gehäuseteils (12) und des zweiten Gehäuseteils (14) das jeweilige Führungselement (28, 29) mit dem Gegenführungselement (47, 40.2) derart in Eingriff bringbar ist, dass das erste Gehäuseteil (12) und das zweite Gehäuseteil (14) jeweils aneinander längs eines vorgegebenen Weges geführt sind.

4. Abgabevorrichtung nach Anspruch 3, bei welcher das Führungselement (28, 29) und das Gegenführungselement (47, 40.2) derart ausgebildet sind, dass das Führungselement nur dann mit dem Gegenführungselement in Eingriff bringbar ist, wenn das zweite Gehäuseteil (14) sich in einer vorbestimmten Position relativ zum ersten Gehäuseteil (12) befindet.

5. Abgabevorrichtung (10) nach einem der vorhergehenden Ansprüche, bei welcher das zweite Gehäuseteil (14) eine Führungseinrichtung (44', 44'', 44''', 44'''', 44''''') enthält, welche derart ausgelegt ist, dass das jeweilige Kaffee-Auslaufrohr (36) beim Zusammenstecken des ersten Gehäuseteils (12) und des zweiten Gehäuseteils zumindest abschnittsweise mit der Führungseinrichtung (44', 44", 44''', 44'''', 44''''') in Eingriff bringbar ist.

6. Abgabevorrichtung (10) nach einem der vorhergehenden Ansprüche, bei welcher das erste Gehäuseteil (12) oder zweite Gehäuseteil (14) zumindest eine Schnappverbindungseinrichtung (40) mit einer Sperrklinke (40.1) enthält, welche mit einer Ineingriffnahmesektion, welche an dem jeweils anderen Gehäuseteil ausgebildet oder angebracht ist, in Eingriff bringbar ist.

7. Abgabevorrichtung (10) nach einem der vorhergehenden Ansprüche, bei welcher die Mischeinrichtung (52) einen Führungsabschnitt (66) enthält und das zweite Gehäuseteil (14) eine Aussparung (46.2) umfasst, wobei die Aussparung (46.2) derart geformt ist, dass der Führungsabschnitt (66) mit der Aussparung (46.2) in einen festen Eingriff bringbar ist.

8. Abgabevorrichtung nach Anspruch 7, wobei die Milchleitung (32) einen Endabschnitt (32.1) mit einer Eingangsöffnung (32.2) für Milch umfasst und der Führungsabschnitt (66) an diesem Endabschnitt (32.1) angeordnet ist.

9. Abgabevorrichtung (10) nach einem der vorhergehenden Ansprüche, bei welcher das jeweilige Kaffee-Auslaufrohr (36) in einem Körper (26) ausgebildet ist, welcher an einem Endabschnitt eine elektrische Lichtquelle (38) enthält.

10. Abgabevorrichtung (10) nach einem der vorhergehenden Ansprüche, bei welcher das zweite Gehäuseteil (14) eine erste Öffnung (42') enthält, durch welche ein Endabschnitt des Auslaufrohrs (48) zur Abgabe von Milch und/oder Milchschaum steckbar ist, und eine zweite Öffnung (42'') enthält, durch welche ein Endabschnitt des jeweiligen Kaffee-Auslaufrohrs (36) steckbar ist.

11. Getränkebereitungsmaschine (70) mit einer Abgabevorrichtung nach einem der vorhergehenden Ansprüche, wobei das erste Gehäuseteil an einer Gehäusewand der Getränkebereitungsmaschine (70) befestigt ist.

12. Getränkebereitungsmaschine (70) nach Anspruch 11, wobei die Abgabevorrichtung höhenverstellbar angeordnet ist.

13. Verfahren zum Zusammensetzen einer Abgabevorrichtung (10) nach einem der Ansprüche 1 bis 10 mit den Schritten:
Einsetzen der Mischeinrichtung (52) in das zweite Gehäuseteil (14) und
Zusammenstecken des zweiten Gehäuseteils (14) und des ersten Gehäuseteils (12).

14. Verfahren nach Anspruch 13, bei welchem die Mischeinrichtung (52) derart in das zweite Gehäuseteil (14) eingesetzt wird, dass ein Endabschnitt des Auslaufrohrs (48) zur Abgabe von Milch und/oder Milchschaum durch eine Öffnung (42') geführt wird, welche im zweiten Gehäuseteil (14) ausgebildet ist.

15. Verfahren nach Anspruch 13 oder 14, bei welchem die Mischeinrichtung (52) derart in das zweite Gehäuseteil (14) eingesetzt wird, dass ein an der Mischeinrichtung (52) angebrachter Führungsabschnitt (66) mit einer an dem zweiten Gehäuseteil (14) ausgebildeten Aussparung (46.2) im festen Eingriff gebracht wird.

16. Verfahren nach Anspruch 13 bis 15, bei welchem das zweite Gehäuseteil (14) derart auf das erste Gehäuseteil (12) aufgesteckt wird, dass zumindest ein Führungselement, welches an dem ersten Gehäuseteil (12) angebracht ist, mit einem an dem zweiten Gehäuseteil (14) ausgebildeten Gegenführungselement in Eingriff gebracht wird.

17. Verfahren nach Anspruch 13 bis 16, bei welchem beim Zusammenstecken des zweiten Gehäuseteils (14) und des ersten Gehäuseteils (12) das jeweilige Kaffee-Auslaufrohr (36) mit einer Führungseinrichtung (44', 44", 94''', 49'''', 44'''''), welche an dem zweiten Gehäuseteil (14) ausgebildet ist, zumindest abschnittsweise in Eingriff gebracht wird.

## Claims

1. A dispensing device (10) for dispensing coffee and/or milk and/or milk froth, which comprises:
a) a fluid line group (22) for supplying a plurality of fluids, said fluid line group (22) comprising at least a first fluid line (56) for supplying coffee and a second fluid line (58) for supplying steam,
wherein the first fluid line (56) empties into at least one coffee outlet tube (36) and the second fluid line (58) encompasses an outlet opening (54.1) for the steam,
b) a mixing device (52) for mixing milk with steam and/or air, said mixing device (52) comprising
a chamber (62),
a milk line (32) for supplying milk into the chamber (62),
an air line for supplying air into the chamber (62),
an inlet opening (34) for supplying steam into the chamber (62) and
an outlet tube (48) for dispensing milk and/or milk froth out of the chamber (62),
c) a housing (11), which at least partially surrounds the fluid line group (22), the respective coffee outlet tube (36) and the mixing device (52),
wherein the mixing device (52) can be brought into a first predetermined position relative to the second fluid line (58), with a fluid connection between the outlet opening (54.1) of the second fluid line (58) and the outlet opening (34) of the mixing device (52) being established in said position for supplying steam into the chamber (62),
**characterized in that**
d) the housing (11) comprises at least a first housing part (12) and a second housing part (14),
e) the fluid line group (22) is arranged on the first housing part (12) or is embodied in the first housing part,
f) a recess (14.1) for accommodating the mixing device (52) is embodied in the second housing part (14), with the mixing device (52) being capable of being connected to said recess such that the mixing device (52) is held in a second predetermined position relative to the second housing part (14) and
h) the first housing part (12) and the second housing part (14) can be connected such that the mixing device (52) assumes the first predetermined position relative to the second fluid line (58) in the event that the mixing device (52) is accommodated in the recess (14.1) in the second housing part (14).

2. The dispensing device (10) according to claim 1, in the case of which the fluid line group (22) further includes a third fluid line (60) for supplying hot water, which empties into a hot water outlet tube (24), which is guided out of the first housing part (12).

3. The dispensing device (10) according to one of the preceding claims, in the case of which the first housing part (12) comprises at least one guide element (28, 29) and the second housing part (14) comprises a counter guiding element (47, 40.2), wherein, when connecting the first housing part (12) and the second housing part (14), the respective guide element (28, 29) can be brought into engagement with the counter guide element (47, 40.2) such that the first housing part (12) and the second housing part (14) are in each case guided next to one another along a predetermined path.

4. The dispensing device according to claim 3, in the case of which the guide element (28, 29) and the counter guide element (47, 40.2) are embodied such that the guide element can be brought into engagement with the counter guide element only when the second housing part (14) is located in a predetermined position relative to the first housing part (12).

5. The dispensing device (10) according to one of the preceding claims, in the case of which the second housing part (14) includes a guide device (44', 44", 44''', 44'''', 44'''''), which is designed such that the respective coffee outlet tube (36) can be brought into engagement with the guide device (44', 44", 44''', 44'''', 44'''''') at least in sections when the first housing part (12) and the second housing part are connected.

6. The dispensing device (10) according to one of the preceding claims, in the case of which the first housing part (12) or the second housing part (14) includes at least one snap connecting system (40) comprising a catch (40.1), which can be brought into engagement with an engagement section, which is embodied at or attached to the respective other housing part.

7. The dispensing device (10) according to one of the preceding claims, in the case of which the mixing device (52) includes a guide section (66) and the second housing part (14) comprises a recess (46.2), wherein the recess (46.2) is formed such that the guide section (66) can be brought into a fixed engagement with the recess (46.2).

8. The dispensing device according to claim 7, wherein the milk line (32) comprises an end section (32.1) comprising an inlet opening (32.2) for milk and the guide section (66) is arranged at this end section (32.1).

9. The dispensing device (10) according to one of the preceding claims, in the case of which the respective coffee outlet tube (36) is embodied in a body (26), which includes an electrical light source (38) at an end section.

10. The dispensing device (10) according to one of the preceding claims, in the case of which the second housing part (14) includes a first opening (42') through which an end section of the outlet tube (48) can be inserted for dispensing milk and/or milk froth, and which includes a second opening (42''), through which an end section of the respective coffee outlet tube (36) can be inserted.

11. A beverage preparation machine (70) comprising a dispensing device according to one of the preceding claims, wherein the first housing part is fastened to a housing wall of the beverage preparation machine (70).

12. The beverage preparation machine (70) according to claim 11, wherein the dispensing device is arranged so as to be height-adjustable.

13. A method for assembling a dispensing device (10) according to one of claims 1 to 10 comprising the steps:
inserting the mixing device (52) into the second housing part (14) and
connecting the second housing part (14) and the first housing part (12).

14. The method according to claim 13, in the case of which the mixing device (52) is inserted into the second housing part (14) such that an end section of the outlet tube (48) for dispensing milk and/or milk froth is guided through an opening (42'), which is embodied in the second housing part (14).

15. The method according to claim 13 or 14, in the case of which the mixing device (52) is inserted into the second housing part (14) such that a guide section (66), which is attached to the mixing device (52), is brought into a fixed engagement with a recess (46.2), which is embodied at the second housing part (14).

16. The method according to claim 13 to 15, in the case of which the second housing part (14) is snapped to the first housing part (12) such that at least one guide element, which is attached to the first housing part (12), is brought into engagement with a counter guide element, which is embodied at the second housing part (14).

17. The method according to claim 13 to 16, in the case of which the respective coffee outlet tube (36) is brought into engagement at least in sections with a guide device (44', 44'', 44''', 44'''', 44'''''), which is embodied at the second housing part (14), when the second housing part (14) and the first housing part (12) are connected.

## Revendications

1. Dispositif de distribution (10) pour distribuer du café et/ou du lait et/ou de la mousse de lait, laquelle comprend :
a) un groupe de conduits à fluide (22) pour alimenter plusieurs fluides, lequel groupe de conduits à fluide (22) comprenant au moins un premier conduit à fluide (56) pour l'alimentation de café et un deuxième conduit à fluide (58) pour l'alimentation de vapeur, le premier conduit à fluide (56) débouchant dans au moins un tube d'écoulement de café (36) et le deuxième conduit à fluide (58) comportant un orifice de sortie (54.1) pour la vapeur,
b) un système mélangeur (52) pour mélanger du lait avec de la vapeur et/ou de l'air, lequel système mélangeur (52) comprenant une chambre (62),
un conduit de lait (32) pour alimenter du lait dans la chambre (62),
un conduit d'air pour alimenter de l'air dans la chambre (62),
un orifice d'entrée (34) pour alimenter de la vapeur dans la chambre (62) et
un tube d'écoulement (48) pour distribuer du lait et/ou de la mousse de lait hors de la chambre (62),
c) un boîtier (11), lequel entoure au moins en partie le groupe de conduits à fluide (22), le tube d'écoulement de café (36) respectif et le système mélangeur (52), -
le système mélangeur (52) pouvant être amené dans une première position prédéfinie par rapport au deuxième conduit à fluide (58), dans laquelle position une liaison par fluide est établie entre l'orifice de sortie (54.1) du deuxième conduit à fluide (58) et l'orifice d'entrée (34) du système mélangeur (52) pour l'alimentation de vapeur dans la chambre (62),
**caractérisé en ce que**
d) le boîtier (11) comprend au moins une première partie de boîtier (12) et une deuxième partie de boîtier (14),
e) le groupe de conduits à fluide (22) est disposé sur la première partie de boîtier (12) ou est réalisé dans la première partie de boîtier,
f) dans la deuxième partie de boîtier (14) est réalisé un évidement (14.1) pour recevoir le système mélangeur (52), dans lequel évidement, le système mélangeur (52) est enfichable de sorte que le système mélangeur (52) soit maintenu dans une deuxième position prédéfinie par rapport à la deuxième partie de boîtier (14) et
h) la première partie de boîtier (12) et la deuxième partie de boîtier (14) sont emboîtables de telle sorte que lorsque le système mélangeur (52) est logé dans l'évidement (14.1) dans la deuxième partie de boîtier (14), le système mélangeur (52) adopte la première position prédéfinie par rapport au deuxième conduit à fluide (58).

2. Dispositif de distribution (10) selon la revendication 1, sur lequel le groupe de conduits à fluide (22) contient par ailleurs un troisième conduit à fluide (60) pour l'alimentation d'eau chaude qui débouche dans un tube d'écoulement d'eau chaude (24) sortant de la première partie de boîtier (12).

3. Dispositif de distribution (10) selon l'une quelconque des revendications précédentes, sur lequel la première partie de boîtier (12) comprend au moins un élément de guidage (28, 29) et la deuxième partie de boîtier (14) comprend un contre-élément de guidage (47, 40.2), lors de l'emboîtement de la première partie de boîtier (12) et de la deuxième partie de boîtier (14) l'élément de guidage concerné (28, 29) pouvant être amené en engagement avec le contre-élément de guidage (47, 40.2), de telle sorte que la première partie de boîtier (12) et la deuxième partie de boîtier (14) soient chacune conduites l'une contre l'autre le long d'un trajet prédéfini.

4. Dispositif de distribution selon la revendication 3, sur lequel l'élément de guidage (28, 29) et le contre-élément de guidage (47, 40.2) sont réalisés de telle sorte que l'élément de guidage ne puisse être amené en engagement avec le contre-élément de guidage que lorsque la deuxième partie de boîtier (14) se trouve dans une position prédéterminée par rapport à la première partie de boîtier (12).

5. Dispositif de distribution (10) selon l'une quelconque des revendications précédentes, sur lequel la deuxième partie de boîtier (14) contient un système de guidage (44', 44'', 441''', 44'''' 44''''') qui est conçu de telle sorte que lors de l'emboîtement de la première partie de boîtier (12) et de la deuxième partie de boîtier, le tube d'écoulement de café (36) concerné puisse être amené en engagement au moins par tronçons avec le système de guidage (44', 44", 441''', 44'''' 44''''')

6. Dispositif de distribution (10) selon l'une quelconque des revendications précédentes, sur lequel la première partie de boîtier (12) ou la deuxième partie de boîtier (14) contient au moins un système de liaison par enclenchement (40) avec un cliquet d'arrêt (40.1) qui peut être amené en engagement avec une section d'encliquetage qui est réalisée ou montée sur l'autre partie de boîtier respective.

7. Dispositif de distribution (10) selon l'une quelconque des revendications précédentes, sur lequel le système mélangeur (52) contient un tronçon de guidage (66) et la deuxième partie de boîtier (14) comprend une échancrure (46.2), l'échancrure (46.2) étant formée de telle sorte que le tronçon de guidage (66) puisse être amené en un engagement fixe avec l'encoche (46.2).

8. Dispositif de distribution selon la revendication 7, le conduit à lait (32) comprenant un tronçon d'extrémité (32.1) avec un orifice d'entrée (32.2) pour le lait et le tronçon de guidage (66) étant disposé sur ledit tronçon d'extrémité (32.1).

9. Dispositif de distribution (10) selon l'une quelconque des revendications précédentes, sur lequel le tube d'écoulement de café (36) concerné est réalisé dans un corps (26) lequel contient une source lumineuse (38) sur un tronçon d'extrémité.

10. Dispositif de distribution (10) selon l'une quelconque des revendications précédentes, sur lequel la deuxième partie de boîtier (14) contient un premier orifice (42') à travers lequel est insérable un tronçon d'extrémité du tube d'écoulement (48) pour la distribution de lait et/ou de mousse de lait et un deuxième orifice (42''), à travers lequel est insérable un tronçon d'extrémité du tube d'écoulement de café (36) concerné.

11. Machine de préparation de boissons (70) avec un dispositif de distribution selon l'une quelconque des revendications précédentes, la première partie de boîtier étant fixée sur une paroi de boîtier de la machine de préparation de boissons (70).

12. Machine de préparation de boissons (70) selon la revendication 11, le dispositif de distribution étant disposé en étant réglable en hauteur.

13. Procédé pour assembler un dispositif de distribution (10) selon l'une quelconque des revendications 1 à 10 avec les étampes :
Insertion du système mélangeur (52) dans la deuxième partie de boîtier (14) et
emboîtement de la deuxième partie de boîtier (14) et de la première partie de boîtier (12).

14. Procédé selon la revendication 13, lors duquel on insère le système mélangeur (52) dans la deuxième partie de boîtier (14), de telle sorte qu'un tronçon d'extrémité du tube d'écoulement (48) pour la distribution de lait et/ou de mousse de lait soit guidé à travers un orifice (42') qui est réalisé dans la deuxième partie de boîtier (14).

15. Procédé selon la revendication 13 ou 14, dans lequel on insère le système mélangeur (52) dans la deuxième partie de boîtier (14) de telle sorte qu'un tronçon de guidage (66) monté sur le système mélangeur (52) soit amené en engagement fixe avec une encoche (46.2) réalisée sur la deuxième partie de boîtier (14).

16. Procédé selon les revendications 13 à 15, dans lequel on emboîte la deuxième partie de boîtier (14) sur la première partie de boîtier (12) de telle sorte qu'au moins un élément de guidage qui est monté sur la première partie de boîtier (12) soit amené en engagement avec un contre-élément de guidage réalisé sur la deuxième partie de boîtier (14).

17. Procédé selon les revendications 13 à 16, dans lequel, lors de l'emboîtement de la deuxième partie de boîtier (14) et de la première partie de boîtier (12), le tube d'écoulement de café concerné (36) est amené en engagement au moins par tronçons avec un système de guidage ((44', 44'', 441''', 44'''' 44''''') qui est réalisé sur la deuxième partie de boîtier (14).
